(19) Europäisches Patentamt
European Patent Office
Office européen des brevets

(11) Veröffentlichungsnummer: **0 114 286**
**B1**

(12) # EUROPÄISCHE PATENTSCHRIFT

(45) Veröffentlichungstag der Patentschrift: **08.02.89**

(51) Int. Cl.⁴: **B 01 D 13/04**

(21) Anmeldenummer: **83112435.9**

(22) Anmeldetag: **10.12.83**

(54) **Semipermeable eingekapselte Membranen, Verfahren zu ihrer Herstellung und ihre Verwendung.**

(30) Priorität: **27.12.82 CH 7572/82**

(43) Veröffentlichungstag der Anmeldung: **01.08.84 Patentblatt 84/31**

(45) Bekanntmachung des Hinweises auf die Patenterteilung: **08.02.89 Patentblatt 89/6**

(84) Benannte Vertragsstaaten: **BE CH DE FR GB IT LI NL**

(56) Entgegenhaltungen:
**EP-A- 0 008 945**
**DE-A- 2 822 784**
**DE-A- 3 013 171**

(73) Patentinhaber: **ALIGENA AG, Freie Strasse 103, CH-4051 Basel (CH)**

(72) Erfinder: **Linder, Charles, Dr., 20 Derech Yavneh, Rehovot (IL)**
Erfinder: **Mordechai, Perry, Dr., 32 Sokolov Street, Petach Tikvah (IL)**
Erfinder: **Gershon, Aviv, Dr., 42 Burla Street, Tel Aviv (IL)**
Erfinder: **Reuven, Kotraro, Derech Yavneh 11, Rehovot (IL)**

(74) Vertreter: **Blum, Rudolf Emil Ernst et al, c/o E. Blum & Co Patentanwälte Vorderberg 11, CH-8044 Zürich (CH)**

**EP 0 114 286 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft semipermeable eingekapselte Membranen aus einem porösen (semipermeablen) polymeren Substrat und einem dünnen, semipermeablen, hydrophilen Film, der alle äusseren und inneren Oberflächen (z.B. Poren) des Substrats bedeckt. Dieser Film ist mit polyfunktionellen Verbindungen vernetzt, die mindestens zwei funktionelle Gruppen aufweisen.

Die erfindungsgemässen Membranen bestehen also aus dem dickeren porösen (Membran)-Substrat und dem dünnen semipermeablen (Membran)-Film, wobei letzterer im wesentlichen dafür verantwortlich ist, z.B. die Rückhalteigenschaften (den Rückhalt) zu verbessern und die Trennkapazität zu erhöhen, insbesondere bei der Trennung niedermolekularer, einwertiger Salze von mehrwertigen Salzen oder höhermolekularen Verbindungen.

Die erfindungsgemässen Membranen sind also so aufgebaut, dass sich ein hydrophiles Polymer oder ein Polyelektrolyt auf der Oberfläche und in den Poren des Substrats befinden und adsorptive Kräfte (physikalische oder elektrostatische Adsorption) die Verbindung zwischen dem Substrat und dem Polymer(film) herstellen. Der Polymerfilm wird ausserdem durch Vernetzung stabilisiert. Sie können als Umkehrosmose (UO)- oder Ultrafiltrationsmembran (UF) eingesetzt werden.

Kompositmembranen aus einem porösen Substrat und beschichtet mit dünnen semipermeablen Polymerfilmen sind als UO-Membranen bekannt. In der Regel werden mikroporöse Träger oder Materialien, die zur Ultrafiltration geeignet sind, nur auf deren Oberflächen mit hydrophilen Polymeren beschichtet und mit hydrophoben Vernetzungsmitteln vernetzt. Eine Beschichtung der Poren und eine entsprechende Vernetzung des Polymers in diesen Poren findet nicht statt. Die Membranen sind als UO-Membranen für die Wasserentsalzung (sie zeigen ein gutes Salzrückhaltevermögen) geeignet (EP 8945, US 3 951 815, US 3 951 815, US 4 039 440, GB 1 558 807, GB 2 027 614, EP 56 175).

Hergestellt werden diese Membranen unter Verwendung von wasserunlöslichen Vernetzungsmitteln in mit Wasser nicht-mischbaren Lösungsmitteln, die den dünnen hydrophilen Film nicht angreifen. Die Vernetzung erfolgt in der Regel nur an der Oberfläche des Films, gegebenenfalls in den obersten Schichten des Films. Der Film kann eine Dicke von 20 (100) bis 5000 µm, vorzugsweise von 20 (100) bis 500 µm aufweisen. Die Haftung dieses Films auf der porösen Membran erfolgt durch physikalische oder mechanische Kräfte. Unter diesen Umständen ist ein Ablösen der Filmschicht leicht möglich und wie die Praxis gezeigt hat, geschieht dies auch.

Ein weiterer Nachteil dieser bekannten Kompositmembranen besteht darin, dass sie aus Polymeren (Polysulfonen, Polyvinylfluoriden, Polycarbonaten) hergestellt sind, die lösungsmittelempfindlich sind, d.h. in nichtwässerigen Lösungsmitteln löslich sind.

Es sind ferner auch Membranen bekannt, die einen vernetzten, hydrophilen, semipermeablen Film chemisch an ein pröses Membransubstrat gebunden enthalten (EP 25 973, EP 26 399). Das Substrat muss in diesem Fall reaktive Gruppen enthalten, um eine chemische (kovalente) Bindung mit dem Film herzustellen, der anschliessend vernetzt wird (z.B. mit einem Reaktivfarbstoff). Ohne diese chemische Bindung an das Substrat und die anschliessende Vernetzung sind diese Polymeren (Polymerfilme) nicht stabil, insbesondere nicht bei hohen Temperaturen, extremen pH-Werten oder gegen Lösungsmittel, wie z.B. N-Methylpyrrolidon (NMP), Dimethylformamid (DMF) oder Dimethylsulfoxid (DMSO), in denen sie löslich sind.

UF-Membranen, die mit hydrophilen Polymeren zwecks Verbesserung der Rückhalteeigenschaften beschichtet sind, sind aus US 4 125 462 bekannt. Verwendet wurden wasserlösliche Polyamine, die an das Substrat adsorbiert wurden. Eine Vernetzung des Polymers findet nicht statt.

Kompositmembranen, die eine Polymerbeschichtung aufweisen, die nicht vernetzt ist, zeigen aber einen mit der Zeit stark abnehmenden Rückhalt, vermutlich weil die Polymerschicht zu wenig stabil ist und abgewaschen wird.

Die Aufgabe der vorliegenden Erfindung ist es, verbesserte semipermeable Membranen mit guter chemischer und mechanischer Stabilität herzustellen, um so die Nachteile der bekannten Membranen zu überwinden.

Es wurde nun gefunden, dass man diese Nachteile mit neuen sogenannten eingekapselten Membranen überwinden kann, bei denen es keiner chemischen Bindung zwischen dem Substrat und dem semipermeablen Membranfilm bedarf. Durch eine Auswahl geeigneter polyfunktioneller Vernetzungsmittel kann man den Film (das Polymer) vernetzen und stabilisieren, wobei dieser Effekt nicht nur auf der Oberfläche des Films, sondern auch in den Poren des Substrats, in die das hydrophile Polymer hineindiffundieren kann, beobachtet wird und man eine sogenannte eingekapselte Membran erhält.

Durch diese Art der Beschichtung und Vernetzung (z.B. mit nichtionischen positiv oder negativ geladenen polyfunktionellen Verbindungen) erhält man Membranen mit gutem Rückhalt und Durchfluss (Flux), wobei letzterer mit der Zeit nur geringfügig abfällt.

Membranen mit besonders guten Trenneigenschaften und ausgezeichneten Stabilitäten gegen Druck, Temperatur und extreme pH-Werte erhält man bei Verwendung von zwei verschiedenen Vernetzungsmitteln für das hydrophile Polymer, z.B. einem ionischen und einem nicht-ionischen.

Gegenstand der vorliegenden Erfindung sind daher semipermeable eingekapselte Membranen aus einem porösen, semipermeablen polymeren Substrat und einem dünnen semipermeablen Film, dadurch gekennzeichnet, dass der Film alle äusseren und zugänglichen inneren Oberflächen des Substrats bedeckt (einkapselt) und aus mindestens einer Schicht eines vernetzbaren hydrophilen Polymers besteht, die mit mindestens einer polyfunktionellen Verbindung mit mindestens zwei funktionellen Gruppen vernetzt ist, wobei das Substrat gegebenenfalls mit einer polyfunktionellen Verbindung mit mindestens zwei funktionellen Gruppen vorbehandelt ist.

Es ist für die Herstellung der erfindungsgemässen Membranen also erforderlich, dass die Beschichtung des Substrats mit dem Polymer so erfolgt, dass alle äusseren und inneren (Poren) Oberflächen des Substrats bedeckt werden und dass die Vernetzungsmittel sehr reaktiv sind und in relativ kurzer Zeit (z.B. 1 Sekunde bis 60 Minuten) in die Polymerschicht und in das Membransubstrat hineindiffundieren können. Diese poröse Ausgangsmembran (Membransubstrat) muss eine ausreichend grosse innere Oberfläche besitzen und ferner ausreichend porös sein, um eine Diffusion des Polymers zuzulassen. Die polyfunktionellen Vernetzungsmittel müssen in die Polymerschicht hineindiffundieren können, um eine stabile Vernetzung zu erreichen.

Die Vorteile der erfinderischen Membranen liegen einerseits in dem einfachen Verfahren zu ihrer Herstellung (z.B. benötigt man keine Ausgangsmembran, die reaktive Gruppen enthält), sowie andererseits in ihren ausgezeichneten Trenneigenschaften und ihrer Stabilität.

Das Herstellungsverfahren kann für die Modifikation einer Vielzahl von Ausgangsmembranen verwendet werden.

Das Modifikationsverfahren benötigt keinen Trocknungs- oder Härtungsschritt; ferner auch keine Vorrichtung, um die Membran am Schrumpfen zu hindern. Die erfindungsgemässen Membranen können trocken gelagert werden.

Bei den erfindungsgemässen Membranen (UO-UF-Membranen) ist die Gefahr eines Ablösens von Schichten oder ein Auflösen der Membran (Lösungsmittelempfindlichkeit) auf ein Minimum reduziert.

Ausserdem befindet sich die aufgebrachte hydrophile Filmschicht auf allen zugänglichen Oberflächen des Substrats und die Vernetzung der Filmschicht kann mit wasserlöslichen multifunktionellen Verbindungen in einem hydrophilen Lösungsmittel, z.B. in Wasser oder Lösungsmittelgemischen, die Anteile hydrophiler Lösungsmittel enthalten, wie wässrigen Lösungen von Aceton, Dimethylformamid oder N-Methylpyrrolidon, durchgeführt werden.

Die so erhaltenen Membranen sind gemäss ihrer Porengrösse als UF- oder UO-Membranen geeignet, können aber auch als UF-UO-Zwischenmembranen klassiert werden. Die Porengrössen betragen etwa 0,5 bis 50 µm, vorzugsweise 1 bis 10 µm. Sie können z.B. im Druckbereich von vorzugsweise 2 bis 50 bar eingesetzt werden; ihre Trenn(Ausschluss)grenzen (cut-offs) liegen etwa im Bereich von 100 bis 2000 (Molekulargewicht).

Weitere Gegenstände der vorliegenden Erfindung sind Verfahren zur Herstellung der erfindungsgemässen eingekapselten Membranen (bestehend aus dünnen Filmen vernetzter Polymere, die sich auf oder in den Poren der porösen Träger befinden) sowie ihre Verwendung als UO/UF-Membranen für das Gebiet der Konzentrierung und Reinigung von Flüssigkeiten (Lösungen), z.B. bei der Entsalzung von Lösungen organischer Verbindungen (Farbstoffen) oder bei der Abwasserreinigung.

Diese und andere Gegenstände der vorliegenden Erfindung werden nachfolgend weiter erläutert.

Die erfindungsgemässen Membranen sind insbesondere erhältlich, in dem man alle äusseren und zugänglichen inneren Oberflächen des porösen Substrats mit mindestens einer Schicht eines vernetzbaren hydrophilen Polymers beschichtet, wobei das Substrat gegebenenfalls mit einer polyfunktionellen Verbindung mit mindestens zwei funktionellen Gruppen vorbehandelt ist, und die Schicht mit mindestens einer polyfunktionellen Verbindung mit mindestens zwei funktionellen Gruppen vernetzt.

Bevorzugte Membranen mit mindestens einer Polymerschicht sind erhältlich, in dem man

($a_1$) mindestens eine Schicht eines vernetzbaren hydrophilen nicht-ionischen Polymers auf dem Substrat ausbildet und die Schicht mit mindestens einer, vorzugsweise zwei polyfunktionellen Verbindung(en) mit mindestens zwei funktionellen Gruppen vernetzt, wobei mindestens eine der polyfunktionellen Verbindungen ionische Gruppen enthält, oder

($a_2$) mindestens eine Schicht eines vernetzbaren, hydrophilen, ionische Gruppen enthaltenden Polymers auf dem Substrat ausbildet und die Schicht mit mindestens einer polyfunktionellen Verbindung mit mindestens zwei funktionellen Gruppen vernetzt, oder

($a_3$) das Substrat mit einer polyfunktionellen Verbindung mit mindestens zwei funktionellen Gruppen behandelt, dann das Substrat mit einem vernetzbaren hydrophilen Polymer beschichtet und die Schicht mit mindestens zwei polyfunktionellen Verbindungen mit mindestens je zwei funktionellen Gruppen vernetzt; die zuerst adsorbierte polyfunktionelle Verbindung kann das hydrophile Polymer (die Polymerschicht) vernetzen, indem sie von der Substratoberfläche in die Polymerschicht hinein diffundiert.

Die Membranen ($a_1$) können unter Verwendung von polyfunktionellen Verbindungen hergestellt werden, die nicht-ionisch und ionisch (anionisch oder kationisch) oder ionisch (anionisch/anionisch; kationisch/kationisch oder mit entgegengesetzter Ladung anionisch/kationisch) sind, wobei die letzteren gegebenenfalls auch noch mit nicht-ionischen polyfunktionellen Verbindungen kombiniert sein können. Die Reihenfolge für den Einsatz der polyfunktionellen Verbindungen ist beliebig.

Für die Membranen ($a_2$), d.h. für solche, die unter Verwendung von ionischen Gruppen enthaltenden hydrophilen Polymeren hergestellt werden, kann man nicht-ionische und/oder ionische (anionische oder kationische) polyfunktionelle Verbindungen zur Vernetzung und Stabilisierung verwenden. Es können einzelne, mehrere (z.B. mehrere nicht-ionische Verbindungen) oder Kombinationen (z.B. nicht-ionische und anionische Verbindungen) dieser Verbindungen eingesetzt werden.

In einer weiteren bevorzugten Ausführungsform können solche ionischen polyfunktionellen Verbindungen eingesetzt werden, deren Ladung entgegengesetzt zur Ladung des Polymers ist.

Ist das hydrophile, filmbildende Polymer amphoter (enthält es positiv und negativ geladene ionische Gruppen), so erfolgt die Vernetzung vorzugsweise mit anionischen, insbesondere jedoch auch mit nicht-ionischen polyfunktionellen Verbindungen mit mindestens zwei funktionellen Gruppen. Sie dienen in diesem Fall hauptsächlich zur Vernetzung des Polymers und nicht so sehr zur Einführung weiterer ionischer Gruppen in das Polymer. Die Membranen ($a_3$) werden erhalten, in dem man das Substrat mit polyfunktionellen, mindestens zwei funktionelle Gruppen enthaltenden Verbindungen vorbehandelt, dann das hydrophile Polymer aufbringt und dieses schliesslich vernetzt. Die polyfunktionellen Verbindungen (sowohl für die Vorbehandlung als auch für die anschliessende Vernetzung) können ionisch oder nicht-ionisch sein; es können einzelne oder mehrere dieser Verbindungen, z.B. auch als Kombination (nicht-ionisch/ionisch-anionisch; der Verbindungen mit entgegengesetzter Ladung) eingesetzt werden.

Es kann sich um monomere (niedermolekulare) oder polymere Verbindungen handeln. Die Vernetzungsmittel können in die Polymerschicht eindiffundieren und das Polymer vernetzen. Bevorzugt werden zwei Vernetzungsmittel verwendet.

Die Membranen ($a_1$) bis ($a_3$) enthalten mindestens eine Polymerschicht; die polyfunktionellen Verbindungen sind bevorzugt bifunktionell bis tetrafunktionell, insbesondere bi- oder trifunktionell.

Enthält die semipermeable Membranschicht mehr als eine Polymerschicht, so sind dies in der Regel zwei oder drei Schichten, die jeweils vernetzt sind. Die polyfunktionellen Vernetzungsmittel können nicht-ionisch oder ionisch sein, sie können wie angegeben einzeln, im Gemisch (gleiche Vernetzungsmittel) oder in Kombination (verschiedene Vernetzungsmittel) angewendet werden. Beispielsweise können Kombinationen verschieden geladener Vernetzungsmittel (anionisch/kationisch) oder geladener und nicht geladener Vernetzungsmittel (anionisch/nicht ionisch) eingesetzt werden. Die Polymeren zur Herstellung der dünnen Membranschicht können anionische oder kationische Gruppen enthalten oder amphoter sein, wie z.B. Polyamidopolyaminharze; vorzugsweise handelt es sich um nicht-ionische Polymere, wie z.B. Polyäthylenimin (PEI) oder Polyvinylalkohol (PVA).

Beispielhaft werden nachfolgend einige Anordnungen der erfindungsgemässen Membranen angegeben (Aufbau der Membranen):

M = Membransubstrat (Ausgangsmembran, z.B. aus Polyacrylnitrilen, Polysulfonen etc.).

P = hydrophile Polymere zur Ausbildung der semipermeablen dünnen Schicht auf M bzw. der Einkapselung von M, z.B. PEI.

P* = P mit ionischen Gruppen (e.g. mit anionischen, kationischen oder einer Kombination aus beiden (amphotere Polymere)).

J = ionische polyfunktionelle Verbindungen mit mindestens zwei; vorzugsweise zwei oder drei funktionellen (reaktiven) Gruppen.

N = nicht-ionische polyfunktionelle Verbindungen mit mindestens zwei, vorzugsweise zwei oder drei funktionellen (reaktiven) Gruppen.

(Mit J und N wird die chemische Vernetzung durchgeführt).

I. Membranen, die im 1. Modifikationsschicht mit einem Polymer extern und intern beschichtet sind:

M – P – J – N
M – P – N – J
M – P – N – P – J – N
M – P – J – P – J
M – P – N – P – N
M – P – J – N – P – J – N
M – P – J – N – P – J
M – P* – N
M – P* – N – P* – N

II. Membranen, die mit einer ionischen, polyfunktionellen Verbindung (J) vorbehandelt sind:

M – J – P – J
M – J – P – N
M – J – P – J – N
M – J – P – J – N – P – J
M – J – P – J – N – P – J – N
M – J – P – N – P – J – N

III. Membranen, die mit einer nicht-ionischen polyfunktionellen Verbindung (N) vorbehandelt sind:

M – N – P – J
M – N – P – N
M – N – P – J – N
M – N – P – J – N – P – J
M – N – P – J – N – P – J – N
M – N – P – N – P – J – N

Die Ausgangsmembranen (Membransubstrate vor der Modifikation), die erfindungsgemäss eingesetzt werden können, weisen durchschnittliche Porengrössen von 1 bis 500 µm auf und können z.B. Ultrafiltrations-, Umkehrosmose oder mikroporöse Membranen sein. Der bevorzugte Bereich für die Porengrösse ist 1 bis 100 µm, wobei der Bereich von 1 bis 20 µm besonders geeignet ist, um optimale Rückhalteeigenschaften bei gleichzeitig gutem Flux zu erreichen.

Eine wirksame Einkapselung der Membran (Ausgangsmembran) erfordert in der Regel eine minimale, benetzbare innere Oberfläche (Hohlraum), die z.B. mindestens 5% und höchstens 90% des Volumens der gesamten Membran ausmachen kann. Bevorzugt sind die Bereiche zwischen 10 und 80%, bzw. 20 und 75%, jeweils bezogen auf das Gesamtvolumen der Membran.

Als membranbildende Materialien können z.B. organische Polymere, wie Polyacrylnitrile, Polyamide oder Polyvinylchloride und ihre entsprechenden Copolymeren, cellulosische Materialien, Epoxyharze, Polyarylenoxyde, Polycarbonate, Homo- oder Copolymere auf der Basis von heterocyclischen Verbindungen, Polyvinylidenfluoride,

Polytetrafluoräthylene, Polyester, Polyimide, (aromatische) Polysulfone, Polyelektrolytkomplexe oder Polyolefine; sie können einzeln, im Gemisch, als Homo- oder als Copolymere verwendet werden.

Bevorzugt sind poröse Substrate, die cellulosische Materialien (Celluloseacetate), Polyacrylnitrile, aromatische Polysulfone, Polyamide, Polyvinylidenfluoride oder Polytetrafluoräthylene enthalten oder aus diesen bestehen.

Die Membran(substrat)herstellung kann nach verschiedenen literaturbekannten Giessverfahren erfolgen (z.B. US-PS 4 029 582, US-PS 3 556 305, US-PS 3 615 024, US-PS 3 567 810, GB-PS 2 000 720). Das Polymer kann in einem geeigneten Lösungsmittel oder in einem Lösungsmittelgemisch gelöst werden (z.B. N-Methylpyrrolidon-(NMP), Dimethylsulfoxid (DMSO), Dimethylformamid (DMF), Hexamethylphosphoramid, N,N-Dimethylacetamid, Dioxan). Diese Lösung kann weitere Lösungsmittel (Co-Solventien), Teillösungsmittel, Nicht-Lösungsmittel, Salze, Tenside oder Elektrolyte für die Modifikation der Membranstruktur und der Beeinflussung ihrer Rückfluss und Rückhalteeigenschaften enthalten (z.B. Aceton, Methanol, Ethanol, Formamid, Wasser, Methylethylketon, Triethylphosphat, Schwefelsäure, Salzsäure, Fettsäurepartialester von Zuckeralkoholen bzw. deren Ethylenoxidaddukte, Natriumdodecylsulfat (SDS), Natriumdodecylbenzolsulfonat, Natriumhydroxid, Kaliumchlorid, Zinkchlorid, Calciumchlorid, Lithiumnitrat, Lithiumchlorid oder Magnesiumperchlorat). Die Giesslösung wird nach üblichen Methoden filtriert (z.B. durch Druckfiltration durch ein Mikroporfilter oder durch Zentrifugieren) und dann auf ein Substrat wie z.B. Glas, Metall, Papier oder Kunststoff gegossen und von diesem Substrat dann wieder entfernt. Es ist jedoch vorteilhaft, die Giesslösung auf ein poröses Trägermaterial zu giessen, von der die Membran nicht entfernt werden muss. Solche porösen Trägermaterialien können Non-vowens oder auch Gewebe sein, wie z.B. solche aus Cellulose, Polyethylen, Polypropylen, Polyamiden, (Nylon) Polyvinylchlorid und seinen Copolymeren, Polystyrol und Polyethylenterephthalat (Polyester), Polyvinylidenchlorid, Polytetrafluorethylen oder Glasfasern. Die Membran kann auch in Form einer Hohlfaser oder eines Röhrchens gegossen werden. In diesem Fall ist ein Trägermaterial für den praktischen Gebrauch nicht notwendig.

Die Konzentration des Polymers in der Giesslösung ist abhängig von dessen Molekulargewicht und den verschiedenen Zusätzen und kann zwischen etwa 5 und 80 Gew.-% varriieren. Vorzugsweise beträgt die Konzentration 10 bis 50 und insbesondere 15 bis 30 Gew.-%. Die Temperatur bei der Herstellung der Membran kann zwischen −20 und +100 °C variieren, bevorzugt ist jedoch der Bereich zwischen 0 und 60 °C. Auch der Temperaturbereich hängt insbesondere vom Molekulargewicht des Polymers, sowie von den Cosolventien und Additiven in der Giesslösung ab.

Das Giessen der Polymerlösung auf ein Trägermaterial erfolgt nach üblichen und bekannten Methoden. Die Dicke des feuchten Polymerfilms kann zwischen 5 und 2000 Mikrometer (µm) schwanken. Bevorzugt ist jedoch ein Bereich zwischen 50 und 800 Mikrometer, wobei der Bereich zwischen 100 und 500 Mikrometer besonders bevorzugt ist. Der feuchte Polymerfilm und das Trägermaterial werden dann sofort oder nach teilweiser Trocknung (zwischen 5 Sekunden und 48 Stunden) bei Raumtemperatur oder leicht erhöhter Temperatur, gegebenenfalls auch unter Vakuum oder unter Anwendung einer Kombination dieser Massnahmen in ein sogenanntes Gelierbad eingetaucht. Dieses Gelierbad enthält ein Lösungsmittel, in dem das Polymer bzw. die daraus hergestellte Membran nicht löslich sind. Solche Gelierbäder enthalten normalerweise Wasser oder Wasser mit einem kleinen Anteil eines Lösungsmittels (z.B. DMF, NMP) und/oder Tenside (z.B. Natriumdodecylsulfat) bei Temperaturen von 0 bis 70 °C. Ein Beispiel für ein üblicherweise verwendetes Gelierungsbad ist Wasser von 4 °C mit einem Gehalt von 0,5% SDS. Enthält die polymere Giesslösung Komponenten, die durch Wasser oder ein anderes Lösungsmittel ausgewaschen (ausgelaugt) werden können, so wird diese Giesslösung vergossen und getrocknet, ehe man die gebildeten Membranen dann in das Gelierbad gibt. Nach dem Eintauchen in das Gelierbad werden die auswaschbaren Komponenten entfernt und man erhält eine poröse Membran.

In einer dritten Variation wird eine Polymerlösung verwendet, die keine auswaschbaren Komponenten enthält. Diese wird wie üblich vergossen und dann getrocknet. Die Bildung der Poren der Membran hängt in diesem Fall von der Kombination der physikalisch-chemischen Eigenschaften des Polymermaterials und des Lösungsmittels ab oder aber die Poren werden erst durch nachfolgende chemische Reaktion gebildet. Die beschriebenen Herstellungsverfahren sind für die Herstellung von porösen Membransubstraten geeignet, die erfindungsgemäss weiter modifiziert (beschichtet) werden können.

Das Verfahren zur Herstellung der erfindungsgemässen Kompositmembranen ist dadurch gekennzeichnet, dass man ein Substrat mit mindestens einer Schicht eines vernetzbaren hydrophilen Polymers beschichtet, wobei das Substrat gegebenenfalls mit einer polyfunktionellen Verbindung mit mindestens zwei funktionellen Gruppen vorbehandelt ist, und die Schicht mit mindestens einer polyfunktionellen Verbindung mit mindestens zwei funktionellen Gruppen vernetzt.

Bei den hydrophilen polyfunktionellen Polymeren, die zur Beschichtung eingesetzt werden, handelt es sich vorzugsweise um Polymere, die aktive, an Stickstoff-, Sauerstoff-, oder Schwefelatome gebundene Wasserstoffatome enthalten. Als stickstoffhaltige kommen solche mit aliphatischen, aromatischen oder heterocyclischen Aminogruppen, wobei diese primär, sekundär oder tertiär sein können, in Betracht; weniger bevorzugt sind aktive Wasserstoffatome enthaltende Sauerstoff- oder Schwefelverbindungen, die z.B. als Hydroxyl- oder Thiogruppen enthaltende Polymere

vorliegen können. Beispiele solcher Polymere sind Polyäthylenimine (M.G. 150 bis 2 000 000), gegebenenfalls teilweise alkyliert (z.B. mit Methyljodid) oder andersweitig modifiziert, Polyvinylamine (M.G. 1000 bis 1 000 000), Polyvinylalkohole, gegebenenfalls teilweise verestert, Cellulosederivate, wie Äthylcellulose, Carboxymethylcellulose, Hydroxymethylcellulose, Hydroxyäthylcellulose, ferner Polyvinylaniline (M.G. 200 bis 2 000 000), Polybenzylamine, Polyvinylmerkaptane, Polyvinylimidazoline, (poly)aminomodifizierte Polyepihalogenhydrine und Poly(2-chlorethylvinylether) (GB-PS 1 558 807, EP 56 17 5), Polydiallylaminderivate (EP 56175) und Piperidinringe enthaltende Polymere (GB-PS 2 027 614, EP 56175), Kondensationsprodukte aus Dicyandiamid, Formaldehyd und Ammoniumchlorid (US-PS 3 290 310), Aminopolysulfone, Aminopolyarylenoxide (aminomethyliertes Polyphenylenoxid), Polyamidopolyamin-epoxid- oder -epichlorhydrinaddukte, Polyglycidyl(meth)acrylate (EP 56175), Polymere mit hydrophilen Aminogruppen (EP 8945), Polyamin(methylamin)-styrol-polymere (EP 56175), Polymere aus 2-Hydroxyäthyl- oder 2-Aminoäthylmethacrylat, Co-, Block- oder Pfropfpolymerisate aus diesen Monomeren und/oder Polymeren sowie weiteren, insbesondere ionische Gruppen ($-SO_3^{\ominus}$, $-COO^{\ominus}$, $-^{\oplus}NR_4$) enthaltenden Monomeren und/oder Polymeren. Beispiele hierfür sind die Copolymeren aus Styrolsulfonat (Natriumsalz)/Vinylanilin, 2-Aminoäthylmethacrylat/Acrylsäure, Vinylanilin/Vinylbenzyltrimethylammoniumchlorid oder Vinylamin/Vinylsulfonat.

Bevorzugte Komponenten sind Polyvinylalkohole, Cellulosederivate, Polyvinylamine, Polyvinylaniline, Polypiperidine, Polydiallylaminderivate oder aminomodifizierte Polymere auf Basis von Epoxyden oder Epihalogenhydrinen und insbesondere die polyaliphatischen (acylischen oder cyclischen) Polyalkylenimine (Polyäthylenimine) sowie auch die zuvor beispielhaft genannten Copolymeren.

Die Molgewichte der Polyäthylenimine (PEI) können wie angegeben im Bereich von 150 bis 2 000 000 liegen. Vorzugsweise beträgt ihr Molekulargewicht 1000 bis 200 000 und insbesondere 10 000 bis 70 000.

Polymere Polyäthylenimine mit niederen Molekulargewichten (150 bis 1000) können verwendet werden, allerdings werden die Rückhalteeigenschaften der erhaltenen Membranen nicht so gut verbessert wie bei der Verwendung von Polyäthyleniminen mit höheren Molekulargewichten.

Bevorzugt sind andererseits auch wasserlösliche amphotere oder Mosaikblockpolymere, die sowohl kationische als auch anionische Gruppen enthalten und die über ihre reaktiven Gruppen (z.B. $-NH_2$ oder $-OH$) mit polyfunktionellen Verbindungen vernetzt werden und so amphotere Membranen bilden können. Diese Membranen sind besonders geeignet, um Salz von relativ niedrigmolekularen Verbindungen abzutrennen. Beispiele für solche organische Polymere sind das Poly(Vinylamin-Vinylsulfonat) oder dessen teilweise quaternierten Derivate.

Wasser ist das bevorzugte Lösungsmittel für diese Polymeren, obwohl andere Lösungsmittel, wie z.B. niedere Alkohole oder Ketone allein oder in Kombination mit Wasser verwendet werden können. Die Polymerkonzentration (in den Lösungen) kann zwischen 0,1 bis 80 (50)% betragen, vorzugsweise beträgt sie jedoch 1 bis 30% und insbesondere 1 bis 15%. Werden flüssige Polymere verwendet, so können diese auch ohne Lösungsmittel (als reine Substanzen) eingesetzt werden.

Die einzusetzende Polymerkonzentration, die notwendig ist, um ein Optimum an Durchfluss- und Rückhaltevermögen der Membran zu erreichen, ist abhängig von den reaktiven Gruppen, der Temperatur, der Reaktionszeit und dem Molgewicht der Polymeren sowie dem pH-Wert und der Porosität und der Porengrösse des Substrats. Diese Faktoren sowie auch das nach der Reaktion erfolgende Auswaschen kontrollieren das Ausmass der Bindung des Polymers an die Membran sowie auch die Dicke der Polymerschicht. Die Temperatur der Polymerlösung während der Reaktion mit dem Substrat liegt in der Regel zwischen 0 und 90 °C. Die optimale Temperatur ist eine Funktion der Adsorption des Polymers an das Substrat.

Die Reaktionszeit kann zwischen einer Minute und 48 Stunden variieren und ist abhängig von der Temperatur, dem pH-Wert der Lösung sowie der Konzentration der Reaktionspartner sowie dem Molekulargewicht und dem Lösungsverhalten des Polymers.

Der pH-Wert kann gut dazu benutzt werden, um die Reaktivität und die Konformation des Polymers zu beeinflussen (kontrollieren); Durchfluss und Rückhalt der Membran können so für eine vorgegebene Anwendung eingestellt werden.

Der pH-Wert der Polymerlösung dient weiterhin dazu, die Löslichkeit des Polymers und die Menge Polymer, die an der Oberfläche des Substrats adsorbiert wird, zu kontrollieren. Es wurde gefunden, dass bei pH-Werten über 7, insbesondere bei pH-Werten von 7 bis 10, für Polyamine (PEI) optimale Werte erreicht werden, obwohl auch bei höheren oder tieferen pH-Werten gearbeitet werden kann. Wenn pH-Werte im sauren Bereich angewendet werden, um die Löslichkeit der Oligomeren oder Polymeren zu erhöhen, benötigt man eine gewisse Zeit für die Adsorption des Polymers an die Membran; anschliessend kann der pH-Wert so eingestellt werden, dass optimale Reaktionsbedingungen erreicht werden.

Nach der Adsorption der Polymeren an das Substrat wird dieses in Wasser gewaschen, um überschüssiges Polymer zu entfernen. Dieser Schritt ist abhängig von der Porosität der Membran, dem Adsorptionsvermögen des Polymers und der Polymerkonzentration in der verwendeten Polymerlösung. Die Zeit zum Waschen der Membran kann zwischen einer Minute und 48 Stunden variieren, bevorzugt sind jedoch 30 Minuten bis 4 Stunden, wenn man z.B. eine 10%ige PEI-Lösung auf das Substrat 5 Minuten lang einwirken lässt. Übermässiges Waschen oder Spülen der Membran führt zu einem Verlust an Rückhaltevermögen; dieses ist jedoch immer noch höher als bei einer nichtmodifizierten Membran. Ein zu kurzes Waschen der Membran führt in der Regel zu relativ dicken Polymerschichten auf dem Substrat und damit zu Membranen mit relativ geringem Durchfluss. Der pH-Wert und die Temperatur der Waschlösung können etwa zwischen 1 und 12 bzw. 0 bis 100 °C liegen. Bei geringeren PEI-Konzentrationen kann man auch mit kürzeren Zeiten für das Waschen oder nur einem Abtropfenlassen der Membran auskommen. Die Waschlösungen können zwecks Verkürzung der Waschzeiten Zusätze, wie z.B. nichtionische oder anionische Tenside und/oder auch Salze (Natriumcarbonat, Natriumsulfat) enthalten.

Nach der Adsorption der Polymeren oder auch nach dem Waschen bzw. Abtropfenlassen kann durch Wärmebehandlung, z.B. bei Temperaturen von 40 bis 130 °C während 5 bis 30 Minuten, der Polymerschicht z.B. deren Dichte, Dicke, Gleichmässigkeit sowie auch deren Reaktivität (im nachfolgenden Vernetzungsschritt) günstig beeinflusst werden.

Die polyfunktionellen Verbindungen mit mindestens zwei funktionellen Gruppen sind ionische oder nicht-ionische (niedermolekulare oder polymere) Verbindungen, die über ihre funktionellen (reaktiven) Gruppen chemische Bindungen mit dem hydrophilen, filmbildenden Polymer eingehen können. Ihre Reaktivität verdanken diese mindestens zwei funktionelle Gruppen aufweisenden Verbindungen additionsfähigen Mehrfachbindungen, z.B. Doppel- oder Dreifachbindungen, Epoxidgruppen, Aziridingruppen, Aldehydgruppen, Imidatgruppen, Isocyanat- oder Isothiocyanatgruppen, ferner Hydroxylgruppe, Säureanhydridgruppen (Carbonsäureanhydridgruppen), Acylhalogenidgruppen, Kohlensäureimidhalogenidgruppen, sowie N-Methylolgruppen, oder einem als tertiäres Amin oder vorzugsweise einem als Anion abspaltbaren Substituenten, wobei diese Gruppierungen und Substituenten auch in Kombination vorkommen können. Als addierende Mehrfachbindungen enthalten sie beispielsweise die Gruppierungen

$$-CO-\underset{|}{C}=\overset{|}{C},\ -CO-C\equiv C-\ \text{oder}\ -SO_2-\overset{|}{C}=\overset{|}{C}-,$$

die gegebenenfalls weiter substituiert sind. Auch die Isocyanat- oder Isothiocyanatgruppe kann zu diesen Gruppen gezählt werden. Als abspaltbare Gruppen können sie auch quaternäre Ammoniumgruppen, die als tert.-Amine abgespalten werden, wie z.B. die Trimethylammonium- oder Pyridiniumgruppe, oder auch die Sulfoniumgruppe aufweisen. Als bevorzugte reaktionsfähige Gruppe enthalten sie jedoch Substituenten mit einem als Anion abspaltbaren Rest, vorzugsweise mit reaktiven Halogenatomen. Derartige als Anion abspaltbare Reste verdanken ihre Reaktivität zum Beispiel dem Einfluss elektrophiler Gruppen, wie der –CO– oder $-SO_2$-Gruppe in gesättigten aliphatischen Resten. Sie können ihre Reaktivität auch dem Einfluss eines quaternären Stickstoffatoms, wie in der Gruppe

$$>\overset{\oplus}{N}-CH_2CH_2Cl,$$

oder in aromatischen Resten dem Einfluss von in o- und p-Stellung stehenden elektrophilen Gruppen, beispielsweise Nitro, Kohlenwasserstoffsulfonyl- oder Kohlenwasserstoffcarbonylgruppen, oder aber der Bindung an ein Ringkohlenstoffatom, welches einem tertiären Ringstickstoffatom benachbart ist, wie in Halogentriazin- oder Halogenpyrimidinresten, verdanken.

Als besonders vorteilhafte nicht-ionische polyfunktionelle Verbindungen haben sich cyclische Kohlensäureimidhalogenide und vor allem mindestens zwei reaktive Substituenten enthaltende Halogendi- oder -triazinverbindungen sowie Verbindungen mit Isocyanat- oder Isothiocyanatresten, sowie ferner N-Methylgruppen erwiesen. Tetrachlorpyrimidin und vor allem Cyanurchlorid sind besonders vorteilhaft. Bevorzugt sind ferner auch Diepoxyde, Aziridine, Säureanhydride, Dihalogenide von Dicarbonsäure und Dialdehyde.

Bei den cyclischen Kohlensäureimid-halogeniden handelt es sich vorteilhafterweise um

($A_1$) s-Triazinverbindungen mit mindestens zwei an Kohlenstoffatome gebundenen gleiche oder verschiedene Halogenatome, wie z.B. Cyanurchlorid, Cyanurfluorid, Cyanurbromid sowie um deren primäre Kondensationsprodukte mit z.B. Wasser, Ammoniak, Aminen (Alkylaminen), Alkanolen, Alkylmercaptanen, Phenolen oder Thiophenolen;

($B_1$) Pyrimidine mit mindestens zwei reaktionsfähigen gleichen oder verschiedenen Halogenatomen, wie 2,4,6-Trichlor-, 2,4,6-Trifluor- oder 2,4,6-Tribrompyridin, die in 5-Stellung beispielsweise durch eine Alkyl-, Alkenyl-, Phenyl-, Carboxyl-, Cyan-, Nitro-, Chlormethyl-, Chlorvinyl-, Carbalkoxy-, Carboxymethyl-, Alkylsulfonyl-, Carbonsäureamid- oder Sulfonsäureamidgruppe, vorzugsweise jedoch durch Halogen, wie z.B. Chlor, Brom oder Fluor, weitersubstituiert sein können. Besonders geeignete Halogenpyrimidine sind 2,4,6-Trichlor- und 2,4,5,6-Tetrachlorpyrimidin;
ferner Pyrimidinkondensationsverbindungen von der Art wie sie für die Triazine unter ($A_1$) angegeben sind;

(C) Halogenpyrimidincarbonsäurehalogenide, wie z.B. Dichlorpyrimidin-5- oder -5-carbonsäurechlorid;

(D) 2,3-Dihalogen-chinoxalin, -chinazolin- oder -phthalazin-carbonsäure- oder -sulfonsäurehalogenide, wie 2,3-Dichlorchinoxalin-6-carbonsäurechlorid bzw. -6-sulfonsäurechlorid, 2,6-Dichlorchinazolin-6- oder -7-carbonsäurechlorid, 1,4-Dichlorphthalazin-6-carbonsäurechlorid oder -bromid;

(E) 2-Halogen-benzo-thiazol- bzw. -oxazolcarbonsäure- oder -sulfonsäurehalogenide, wie 2-Chlorbenzothiazol- bzw. -oxazol-5- oder -6-carbonsäurechlorid bzw. -5- oder -6-sulfonsäurechlorid;

(F) Halogen-6-pyridazonyl-1-alkanoylhalogenide oder -1-benzoylhalogenide, wie z.B. 4,5-Dichlor-6-pyridazonyl-1-propionylchlorid bzw. -1-benzoylchlorid.

Weitere mindestens zwei reaktive Substituenten aufweisende polyfunktionelle Verbindungen sind beispielsweise

(G) Dicarbonsäuren, Dicarbonsäureester sowie Anhydride oder Halogenide aliphatischer, α,β-ungesättigter Mono- oder Dicarbonsäuren mit vorzugsweise 3 bis 5 Kohlenstoffatomen, wie Maleinsäureanhydrid, Acrylsäurechlorid, Methacrylsäurechlorid und Propionsäurechlorid;

(H) Anhydride oder Halogenide von reaktive Halogenatome enthaltenden aliphatischen Mono- oder Dicarbonsäuren mit vorzugsweise 3 bis 10 Kohlenstoffatomen oder aromatischen Carbonsäuren, wie z.B. Chloracetylchlorid, β-Chlorpropionsäurechlorid, α,β-Dibrompropionsäurechlorid, α-Chlor- oder β-Chloracrylsäurechlorid, Chlormaleinsäureanhydrid, β-Chlorcrotonsäurechlorid bzw. Fluornitro- oder Chlornitrobenzoesäurehalogenide oder -sulfonsäurehalogenide, in welchen das Fluor- bzw. das Chloratom in o- und/oder p-Stellung zu der Nitrogruppe steht, Ester aus ungesättigten Säuren und Polyalkoholen, wie z.B. (Poly)ethylenglykoldi(meth)acrylate;

(I) Carbonsäure-N-Methylolamide oder reaktionsfähige, funktionelle Derivate dieser Methylolverbindungen. Als Carbonsäure-N-methylolamide kommen vor allem N-Methylolchloracetamid, N-Methylol-bromacetamid, N-Methylol-α,β-dichlor- oder -dibrompropionamid, N-Methylol-acrylamid, N-Methylol-α-chlor- oder -α-bromacrylamid in Betracht. Als reaktionsfähige Derivate der Carbonsäure-N-methylolamide kommen beispielsweise die entsprechenden N-Chlormethyl- oder N-Brommethylamide in Frage;

(J) gegebenenfalls verätherte N-Methylolharnstoffe oder N-Methylolmelamine, wie z.B. N,N-Dimethylolharnstoff, N,N-Dimethylolharnstoffdimethyläther, N,N'-Dimethyloläthylen- oder -propylenharnstoff, 4,5-Dihydroxy-, N'-di-methyloläthylenharnstoff oder -dimethyläther bzw. Di- bis Hexamethylolmelamine, Trimethylolmelamindimethyläther, Pentamethylolmelamin-di- oder -trimethyläther, Hexamethylolmelamin-penta- oder -hexamethyläther;

(K) Kondensationsprodukte von mindestens eine phenolische Hydroxylgruppe aufweisenden Diarylalkanen mit Halogenhydrinen, z.B. das Diepoxid aus 2,2-Bis(4'-hydroxyphenyl)-propan und Epichlorhydrin, sowie auch Glycerin-triglycidyläther und ferner entsprechende Diaziridine; im einzelnen seien die folgenden Verbindungen (Mono- oder Polyepoxide) genannt:

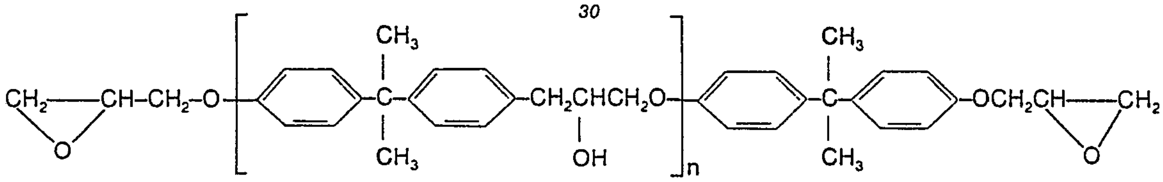

n ~ 1 bis 12

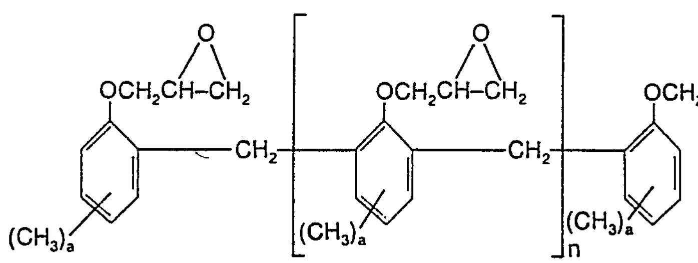

n ~ 0.2 bis 1
a = 0 oder 1

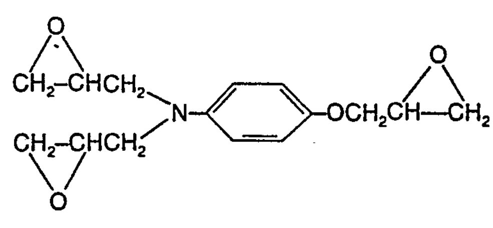

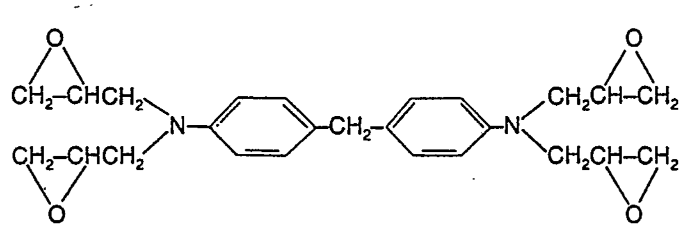

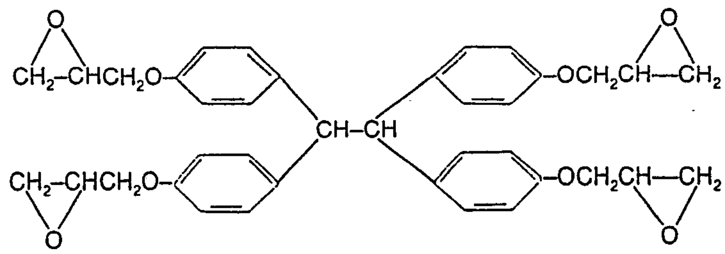

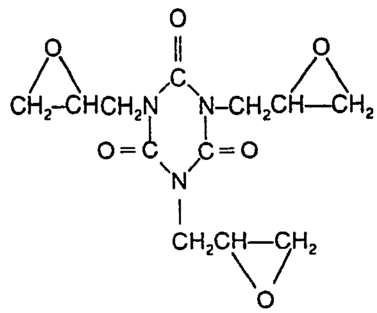

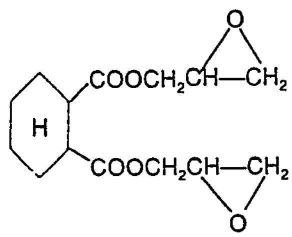

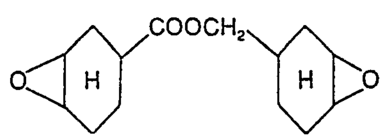

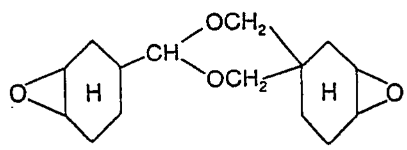

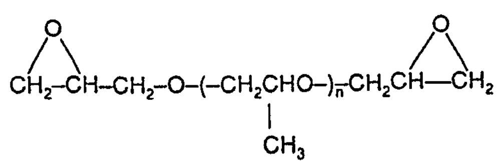

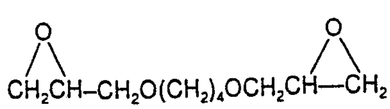 , 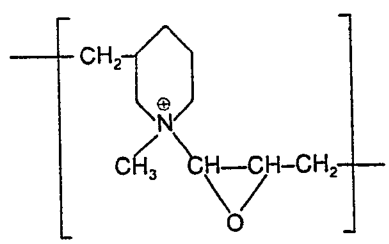

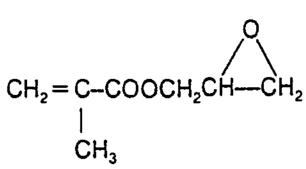 , 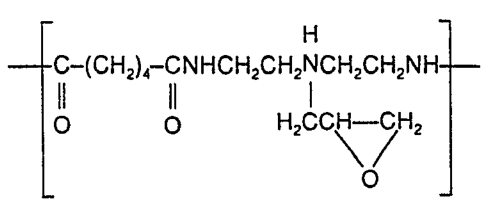

(L) Di-aldehyde, wie z.B. Glutar- oder Adipinaldehyd;

(M) Diisocyanate oder Diisothiocyanate, wie z.B. Alkylen ($C_2$–$C_4$)-Diisocyanate, insbesondere Äthylendiisocyanate, Phenylen- oder Alkyl-($C_2$–$C_4$)-substituierte Phenylendiisocyanat, wie z.B. Phenylen-1,4-diisocyanat oder Toluol-2,4-diisocyanat, ferner Phenylendiisothiocyanate, wie z.B. Phenylen-1,4-diisothiocyanat;

(N) Weitere reaktive Verbindungen wie Trisacrylol-hexahydro-s-triazin, Epoxide (verschieden von den obengenannten), Aziridine, Vinylverbindungen oder Chlorhydrine, wie z.B. Äthylenglykoldichlorhydrin oder Glycerindi(tri)-chlorhydrin.

Bevorzugte ionische polyfunktionelle Verbindungen sind Triazinyl- oder Pyrimidylderivate, wie z.B. reaktive Azofarbstoffe mit diesen Resten als Reaktivgruppierung sowie mit Sulfo-($SO_3^{\ominus}$), Carboxyl-($COO^{\ominus}$–) und/oder Ammoniumgruppen. Farblose Verbindungen mit den gleichen Reaktivgruppierungen sind ebenfalls geeignet.

Die ionischen reaktiven Farbstoffe können verschiedenen Klassen angehören und sind z.B. Anthrachinon-, Formazan- oder Azofarbstoffe. Azofarbstoffe sind bevorzugt. Sie können gegebenenfalls auch als Metallkomplexe vorliegen.

Als Reaktivgruppen (z.B. in den Farbstoffen) seien die folgenden genannt: Carbonsäurehalogenidgruppen, Sulfonsäurehalogenidgruppe, Reste von α,β-ungesättigten Carbonsäuren oder Amiden, z.B. der Acryl-, Methacryl-, α-Chloracryl-oder α-Bromacrylsäure, Acrylamidreste, Reste vorzugsweise niedriger Halogenalkylcarbonsäure, z.B. der Chloressigsäure, α,β-Dichlorpropionsäure oder α,β-Dibrompropionsäure; Reste von Fluorcyclobutancarbonsäuren, z.B. der Tri-oder Tetrafluorcyclobutancarbonsäure; Reste mit Vinylacylgruppen, z.B. Vinylsulfongruppen oder Carboxyvinylgruppen; Reste, die Äthylsulfonyl-($-SO_2CH_2CH_2OSO_2OH$, $-SO_2CH_2CH_2Cl$) oder Äthylaminosulfonylgruppen ($-SO_2NHCH_2CH_2OSO_2OH$) enthalten und halogenierte heterocyclische Reste, wie z.B. Reste von Dihalogenchinoxalinen, Dihalogenpyridazonen, Dihalogenphthalazinen, Halogenbenzthiazolen oder vorzugsweise halogenierte Pyrimidinen oder 1,3,5-Triazinen, wie z.B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Beispielhaft seien die folgenden reaktiven Gruppen, aufgezählt: Monochlortriazinyl- Dichlortriazinyl- 2,4-Dichlorpyrimidyl, 2,3-Dichlorchinoxalin-6-carbonyl, 4,5-Dichlorpyridazonpropionyl, 1,4-Dichlorphthalazin-6-carbonyl, Chlorbenzthiazol, das mit einem Farbstoffmolekül über –CONH–, $-SO_2NH-$, –NH–Ar–N=N– (Ar = Phenylen oder Naphthylen), verbunden ist, 5-Chlor-4-methyl-2-methylsulfonyl-pyrimidyl, Vinylsulfonyl, β-Sulfatoäthylsulfonyl, 4-Sulfatoäthylaminosulfonyl, β-Chloräthylsulfonyl oder β-Sulfatopropionamido.

Besonders bevorzugt sind reaktive Azofarbstoffe, die Sulfonsäuregruppen ($-SO_3H$) oder Carboxylgruppen (–COOH) enthalten, wobei diese auch in Salzform, z.B. in Form eines Alkalimetallsalzes (Natriumsalz) vorliegen können, und die als Reaktivgruppierungen Monochlortriazin-, Dichlortriazin-, 2,4-Dichlorpyrimidin-, Vinylsulfonyl-, β-Sulfatoäthylsulfonyl-, β-Chloräthylsulfonyl-oder β-Sulfatoäthylaminosulfonylreste enthalten.

Ebenfalls bevorzugt sind die Di-und Polyepoxide, wie z.B Butan-1,4-diglycidyläther (Diepoxide), Kondensationsprodukte aus Glycerin und Epichlorhydrin (Triepoxide) und Polyamido-polyamin-epichlorhydrin (Polyepoxide).

Besonders wertvoll und vielseitig sind die Membranen, in denen das hydrophile Polymer mit einem sulfonsäuregruppenhaltigen Azofarbstoff modifiziert ist. Der Azofarbstoff kann auch komplexgebundenes Metall, z.B. Kupfer, enthalten.

Der Vernetzungs- und (Beladungs)schritt mit den ionischen oder nicht-ionischen polyfunktionellen Verbindungen kann vorzugsweise in wässrigem Medium ausgeführt werden und unterscheidet sich daher von den üblichen Vernetzungen bei Kompositmembranen (UF/UO-Membranen).

Die Vernetzung kann durch Bildung von chemischen Bindungen, elektrostatischen Wechselwirkungen zwischen ionischen Gruppen oder durch Komplexierung polymerer Funktionen mit Metallionen erfolgen. Alle drei Möglichkeiten der Vernetzung können nebeneinander vorliegen. Bevorzugt ist die Vernetzung unter Bildung chemischer Bindungen.

Eine oder auch mehrere Komponenten, z.B. ein Reaktivfarbstoff und ein mehrwertiges Metallsalz ($CuSO_4$, $CrCl_3$ oder $FeCl_3$) können allein oder in Kombination, gegebenenfalls gleichzeitig oder nacheinander zur Vernetzung eingesetzt werden.

Die meisten der genannten polyfunktionellen (nicht-ionischen und farblosen) Verbindungen, wie z.B. Diepoxide, Aziridine, Säureanhydride und vorzugsweise cyclische Kohlensäureimidhalogenide (Cyanurchlorid, Tetrachlorpyrimidin) oder Dialdehyde können aus wässrigem Medium unter Einhaltung bestimmter pH-Wert- und Temperaturbereiche appliziert werden. Die Säurehalogenide (Dihalogenide von Dicarbonsäuren oder Trihalogenide) werden dagegen aus aprotischen Lösungsmitteln appliziert.

Die ionischen und nicht-ionischen polyfunktionellen Verbindungen können z.B. aus 0,01 bis 20 (0,1 bis 20)%igen wässrigen Lösungen (Suspensionen) zur Vernetzung des filmbildenden Polymers eingesetzt werden. Vorzugsweise enthalten diese Lösungen 0,05 bis 10 bzw. 0,05 bis 5 (0,5 bis 5) Gew.-% der Vernetzungsmittel. Etwa 0,05 bis 25 Milliäquivalente/g der Vernetzungsmittel können an das Polymer in den erhaltenen Membranen gebunden sein.

Die Vernetzung der Polymerschicht kann gegebenenfalls auch bei erhöhter Temperatur, z.B. im Bereich von 40 bis 130 °C durchgeführt werden.

Wird z.B. eine Polyäthyleniminschicht gebildet und die Vernetzung mit Cyanurchlorid ausgeführt, so wird dieses Vernetzungsmittel aus wässrigorganischer Suspension (Aceton(Wasser) in einer Menge von 0,5 bis 5 Teilen pro Teil der Membran

eingesetzt. Um eine Hydrolyse des (ersten Chloratoms des) Dyanurchlorids zu vermeiden, wird die Temperatur unter +4 °C, z. B. bei ±0 °C, gehalten. Der pH-Wert wird bei etwa 8 bis 11 gehalten, während die Reaktionszeit im Bereich von 1 Minute bis zu 5 Stunden liegen kann.

In der Regel werden nicht-ionische polyfunktionelle Verbindungen zusammen mit ionischen Verbindungen verwendet; letztere werden meistens zuerst verwendet und erst anschliessend die nicht-ionischen Verbindungen. Enthalten die zydrophilen, filmbildenden Polymeren bereits ionische Gruppen (anionische, kationische oder amphotere Polymere) so ist normalerweise die Einführung weiterer ionischer Gruppen in die polymere Membranschicht nicht nötig, so dass in diesem Fall eine Vernetzung mit einer nicht-ionischen polyfunktionellen Verbindung ausreicht; gegebenenfalls kann man auch ionische Vernetzungsmittel verwenden.

Die Umsetzung mit den polyfunktionellen Verbindungen dient wie angegeben zur Vernetzung der Membran und gegebenenfalls der Einführung von positiven oder negativen Ladungen (ionischen Gruppierungen) in die Membranoberfläche und/oder die Poren und erfolgt ein- oder zweistufig.

Einstufig bedeutet, dass die polyfunktionelle Verbindung und sogenannte Fixiermittel (z. B. Alkali) in einem Bad angewendet werden.

Im zweistufigen Verfahren erfolgt zunächst die Adsorption der polyfunktionelle Verbindung und dann in einer separaten Reaktionslösung der Fixierschritt (chemische Reaktion zwischen der polyfunktionellen Verbindung und den hydrophilen Polymer). Das zweistufige Verfahren ist bevorzugt, da einerseits die Konzentration der polyfunktionellen Verbindung in der Adsorptionslösung niedriger gehalten werden und eine solche Lösung gegebenenfalls mehrfach verwendet werden kann und andererseits die Gesamtreaktionszeit kürzer ist als im einstufigen Verfahren.

Im zweistufigen Verfahren kann die Konzentration der polyfunktionellen Verbindung, z. B. eines Reaktivfarbstoffes in wässriger Lösung etwa 0,5 bis 3% betragen; die Adsorption wird z. B. bei Temperaturen von 20 bis 35 °C während 2 bis 60 Minuten durchgeführt; der pH-Wert kann 4 bis 8 betragen. Die Fixierung kann dann in einer wässrigen, auf einen pH-Wert von 9 bis 12 eingestellten Lösung durchgeführt werden, wobei die Reaktionszeit etwa 30 Minuten betragen kann. Die Einstellung des pH-Wertes erfolgt mit beliebigen anorganischen (Natriumcarbonat) oder organischen Basen.

Die Membranen können, je nach Verwendungszweck verschiedene Formen aufweisen, z. B. plattenförmig, blattförmig oder röhrenförmig sein oder in Form einer Tasche, eines Sacks, eines Konus oder als Hohlfasern vorliegen. Bei starker Druckbelastung können die Membranen natürlich durch Nonwoven-Träger, Träger aus textilen Geweben oder Papier, Drahtsieben oder Lochplatten (Module) geschützt (verstärkt) werden. Innerhalb des weiter oben angegebenen Bereiches kann die Porengrösse durch Tempern bei verschiedenen Temperaturen variiert und ebenfalls dem jeweiligen Verwendungszweck angepasst werden. So kann man z. B. durch Tempern der Membranen (50 bis 150 °C) vor oder nach ihrer chemischen Modifikation die Porengrösse und damit der Durchfluss und das Rückhaltevermögen der Membranen verändern.

Gegenüber bekannten Membranen zeigen die erfindungsgemässen bzw. erfindungsgemäss hergestellten Membranen folgende Vorteile:

Verbesserung des Wirkungsgrades bei der Trennung von geladenen von nicht-geladenen (nieder- oder hochmolekularen) Verbindungen.

Einsatzmöglichkeit bei pH-Werten bis etwa 12, vorzugsweise 2 bis 12, und Temperaturen bis zu etwa 80 °C, vorzugsweise im Temperaturbereich zwischen Raumtemperatur (15–20 °C) und 80 °C.

Verbesserung der Stabilität gegenüber Lösungsmittel, wobei die Membranen in den üblichen Lösungsmitteln, z. B. N,N-Dimethylformamid, nicht mehr löslich sind.

Verbesserter Widerstand gegen hohe Drücke (gute mechanische Stabilität). Druckbereich etwa zwischen 2 und 100, vorzugsweise 2 und 50 und insbesondere 2 bis 30 bar.

Insbesondere für die folgenden Anwendungen sind die erfindungsgemässen Membranen vorteilhaft, wobei es sich im Prinzip stets um Trennungen einwertiger Ionen niedrigen Ionengewichts von mehrwertigen Ionen mit niedrigem oder höherem Ionengewicht und einwertigen Ionen mit höherem Ionengewicht, um Trennungen ionogener von nicht-ionogenen Substanzen oder von ionogenen Verbindungen unterschiedlichen Molekulargewichts oder entgegengesetzter Ladung handelt. Die Trennung erfolgt nach üblichen Methoden, z. B. indem man die zu trennende Flüssigkeit/Lösung auf einer Seite der Membran vorlegt und unter Anwendung eines hydraulischen Drucks, der grösser ist als der osmotische Druck der Lösungen, die Lösung filtriert:

1. Die Trennung von organischen und auch metallorganischen ionogenen oder nicht-ionogenen Substanzen von Nebenprodukten aus einer Reaktionsmischung und anderen Substanzen, welche darin enthalten sind, z. B. von Salzen wie Natriumchlorid, Natriumsulfat oder Natriumacetat oder Säuren.

2. Die Reinigung von Abwässern, welche bei der Produktion und Anwendung von Farbstoffen und optischen Aufhellern anfallen.

3. Die Trennung von ionogenen Molekülen von Wasser, d. h. die Konzentrierung von wässrigen Lösungen, welche Metallkomplexe, Tenside, Farbstoffe oder Proteine enthalten, wobei bessere Ergebnisse bezüglich des Wirkungsgrades (Durchfluss pro Zeiteinheit) und des Trenneffektes im Vergleich zu bekannten Membranen erzielt werden.

Der Trenneffekt (das Rückhaltevermögen) der Membranen kann wie folgt gemessen werden: eine kreisförmige Membran von 13 $cm^2$ Fläche wird, auf einer Sinterscheibe aus rostfreiem Stahl ruhend, in eine zylindrische Zelle aus rostfreiem

Stahl eingesetzt. 150 ml der (zu prüfenden) Lösung, die die zu prüfende Substanz in der Konzentration $c_1$ (g Substanz in g Lösung) enthält, wird auf die Membran im Stahlzylinder gegeben und mit Stickstoff einem Druck von 14 bar ausgesetzt. Die Lösung wird magnetisch gerührt. Die auf der Austrittsseite der Membran anfallende Flüssigkeit wird auf ihren Gehalt (Konzentration) $c_2$ an zu prüfender Substanz untersucht, indem am Start des Experimentes 3 Muster von je 5 ml gezogen werden. Im allgemeinen ist die Durchflussmenge durch die Membran und die Zusammensetzung der 3 Muster konstant. Hieraus lässt sich das Rückhaltevermögen als

$$R = \frac{c_1 - c_2}{c_1} \cdot 100\ (\%)$$

berechnet. Als Durchflussmenge pro Flächen- und Zeiteinheit ergibt sich

$D = V \cdot F^{-1} \cdot t$ V: Volumen
F: Membranfläche
t: Zeit

D ist zweckmässig ausgedrückt in $m^3 \cdot m^{-2} \cdot d^{-1}$, d.h. Anzahl Kubikmeter je Quadratmeter Membranfläche und Tag oder in $lm^{-2}h^{-1}$, d.h. Liter pro Quadratmeter Membranfläche und Stunde.

Zusätzlich zu den Messungen an Flachmembranen werden auch Messungen mit röhrenförmigen Membranen von 60 cm Länge und einem äusseren Durchmesser von 1,4 cm durchgeführt. Diese röhrenförmigen Membranen werden dazu in eine perforierte Röhre aus rostfreiem Stahl gebracht.

Das Ganze wird in eine Röhre aus Polycarbonat gebrach. Der Ausfluss der Membran befindet sich zwischen dieser äusseren Polycarbonatröhre und der Stahlröhre. Die Flüssigkeitszugabe erfolgt als turbulent fliessender Strom der Lösung unter Druck (30 bar). Die Fliessgeschwindigkeit wird konstant bei etwa 10–15 Litern pro Minute gehalten. Die Berechnung des Rückhaltevermögens und des Durchflusses erfolgt auf die gleiche Weise wie für die Flachmembranen.

In den folgenden Beispielen werden die Farbstoffe und farblosen Verbindungen der Formeln (101) bis (105) als polyfunktionelle Verbindungen zur Vernetzung des hydrophilen Polymers und zur Einführung ionischer Gruppen verwendet. Die Farbstoffe der Formeln (106) und (107) werden in Testlösungen verwendet.

Teile und Prozente in den nachfolgenden Beispielen beziehen sich – sofern nicht anders angegeben – auf das Gewicht.

(101)

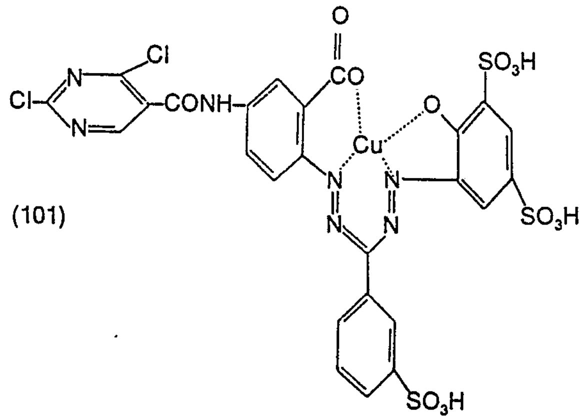

(102)

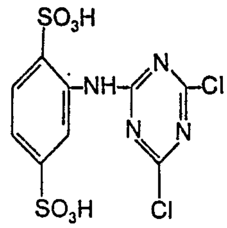

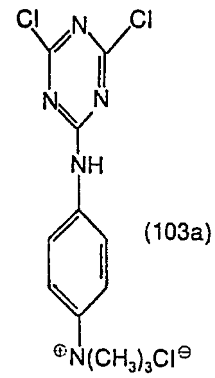

(103a)

(104)

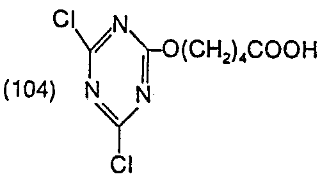

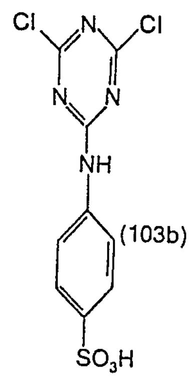

(103b)

(105)

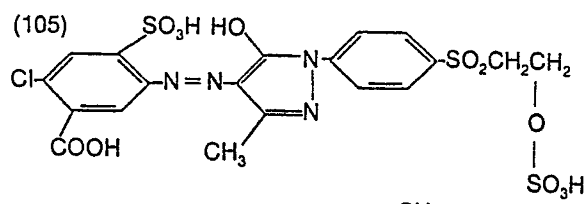

(106)

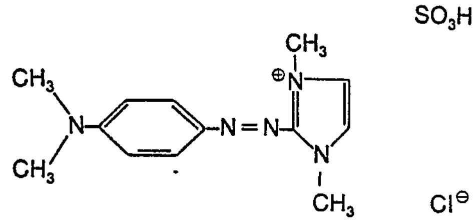

(107)

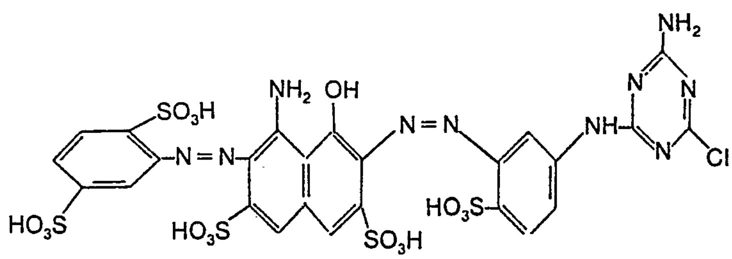

Beispiel 1

Ein Membran aus einem Polysulfon mit wiederkehrenden Einheiten der Formel

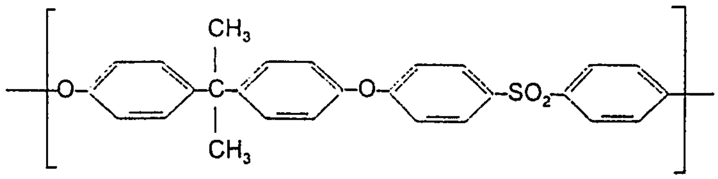

.,

(Molekulargewicht: etwa 42 000) deren Durchfluss/Rückhaltevermögen (Rückhalt) in Tabelle 1 angegeben sind, wird wie nachfolgend angegeben (Modifikationsschritte (a) bis (k)) modifiziert:

(a) Die Membran wird 10 Minuten lang in eine 5%ige wässrige Lösung von Polyäthylenimin (PEI) (mittleres Molekulargewicht 30 000) eingetaucht (pH-Wert der Lösung: 8,5).

(b) Waschen mit Wasser – 2 Stunden

(c) Behandeln der Membran 10 Minuten lang in einer wässrigen 2%igen Suspension von Cyanurchlorid bei 0 bis 4 °C.

(d) Waschen in Eiswasser – 10 Minuten

(e) Behandeln der Membran während 5 Minuten in einer 10%igen wässrigen Lösung von PEI (pH-Wert der Lösung: 8,5).

(f) Waschen in Wasser – 2 Stunden

(g) Behandeln der Membran während 15 Minuten in einer wässrigen Lösung, die 1% des Farbstoffs der Formel (101) und 10% Kochsalz (NaCl) enthält.

(h) Abtropfenlassen der Membran während 10 Sekunden.

(i) Behandeln der Membran während 30 Minuten in einer wässrigen, 2%igen Sodalösung.

(j) Waschen mit Wasser – 10 Minuten.

(k) Behandeln in einer Cyanurchloridsuspension wie in (c), jedoch nur während 5 Minuten.

Durchfluss und Rückhalt der so modifizierten Membran sind in Tabelle 1 angegeben

Tabelle 1

| gelöste Verbindung | Konzentration % | Vor der Modifikation | | Nach der Modifikation | |
|---|---|---|---|---|---|
| | | Rückhalt % | Durchfluss $l/m^2 \cdot h$ | Rückhalt % | Durchfluss $l/m^2 \cdot h$ |
| Farbstoff der Formel (107) | 1,5 | 69 | 260 | 99,64 | 96 |
| Farbstoff der Formel (106) | 2,0 | 50 | 75 | 98 | 33 |
| Kongorot | 1,0 | 45 | 184 | 99,1 | 86 |
| p-Toluolsulfonsäure | 1,0 | 2,1 | 142 | 18 | 114 |
| NaCl | 1,0 | 0 | 270 | 6,9 | 152 |

Testbedingungen: Verwendung von Flachmembranen
Druck: 20 bar, Temperatur: 25 °C
pH-Wert der Lösungen: 7,0

Stabilitätstest:

Die wie angegeben modifizierte Membran wird als Röhrenmembran mit einer 4%igen Lösung des Farbstoffs der Formel (107) bei 50 °C, einem Druck von 20 bar und einem pH-Wert der Lösung von 10 getestet: Der Rückhalt beträgt 99% bei einem Durchfluss von 1800 $l/m^2 \cdot d$. Nach 2000 Stunden ununterbrochenem Einsatz werden mit dieser Membran noch die folgenden Werte erzielt: Rückhalt: 99,6%; Durchfluss: 1300 $1/m^2 \cdot d$.

Beispiel 2

Eine Polysulfonmembran gemäss Beispiel 1, die jedoch vor der Modifikation einen Rückhalt von 91% (Farbstoff der Formel (107)) aufwies, wird gemäss den Modifikationsschritten (a), (b), (g), (h), (i), (j) und (k) modifiziert. Die so erhaltene Membran weist einen Rückhalt von 99,6% und einem Durchfluss von 110 $l/m^2 \cdot h$ auf (Testbedingungen: Farbstoff der Formel (107), 5%ige Lösung, pH-Wert: 7,0, 20 bar).

Das gleiche Membranmaterial wird als Röhrenmembran zur Reinigung eines Abwassers mit hohem Anteil an organischen Kohlenstoff eingesetzt. Bei einem Druck von 20 bar, 55 °C und einem pH-Wert des Abwassers von 10 wird ein Rückhalt an organischen Kohlenstoff von 93% bei einem Durchfluss von 1100 $l/m^2 \cdot d$ erzielt.

Beispiel 3

Eine Polysulfonmembran, hergestellt aus einem Polysulfon mit wiederkehrenden Einheiten der Formel

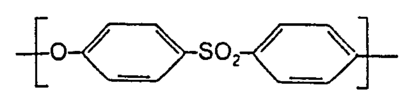

wird wie in Beispiel 1 beschrieben, modifiziert. Die so erhaltene Membran (Flachmembran) weist einen Rückhalt von 99,1% bei einem Durchfluss von 88 $l/m^2 \cdot d$ für den Farbstoff der Formel (107) (5%ige wässrige Lösung) bei einem Druck von 20

bar auf. Für die nicht-modifizierte Membran lauten die entsprechenden Werte für Rückhalt und Durchfluss: 82% und 150 l/m² · d.

Beispiel 4

Beispiel 3 wird wiederholt, wobei man anstelle von PEI 10%ige Lösungen der folgenden Polymeren verwendet:

(I) Polyvinylamin · HCl (MG 50 000)
(II) Poly(vinylamin/vinylsulfonat) (80:20) (MG 40 000)
(III) Polyvinylalkohol (MG 20 000)

(IV) 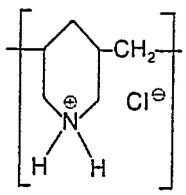 MG 35 000.

Die so erhaltenen Membranen werden mit einer 1,5%igen Lösung des Farbstoffes der Formel (107), bei einem Druck von 20 bar und Raumtemperatur (25 °C) getestet. Die Ergebnisse sind in Tabelle 2 angegeben.

Tabelle 2

| Polymer | Rückhalt % | Durchfluss l/m² · h |
|---|---|---|
| I | 98,9 | 75 |
| II | 99,0 | 102 |
| III | 98,0 | 56 |
| IV | 99,2 | 68 |

Beispiel 5

Beispiel 1 wird wiederholt, wobei jedoch im Reaktionsschritt (e) eine 1%ige PEI-Lösung anstelle der 10%igen Lösung verwendet wird und die Membran aus Polyacrylnitril anstelle von Polysulfon hergestellt worden ist.

In Tabelle 3 sind die erhaltenen Werte vor und in Tabelle 4 nach der erfindungsgemässen Modifikation angegeben. Die Testbedingungen (Tabelle 4) sind die gleichen wie in Beispiel 1 angegeben.

Tabelle 3

| gelöste Verbindung | Testbedingungen | Rückhalt % | Durchfluss l/m² · h |
|---|---|---|---|
| Farbstoff der Formel (107) | 0,5%, 20 bar, Raumtemperatur (R.T.) | 81 | 296 |
| p-Toluolsulfonsäure | 2%, 20 bar, R.T. | 1,7 | 640 |
| NaCl | 2%, 20 bar, R.T. | 1,6 | 320 |

Tabelle 4

| gelöste Verbindung | Rückhalt % | Durchfluss l/m² · h |
|---|---|---|
| Farbstoff der Formel (107), 1,5% | 99,6 | 70 |
| p-Toluolsulfonsäure, 2% | 48 | 53 |
| NaCl, 2% | 11 | 76 |

Beispiel 6

Beispiel 2 wird wiederholt, wobei man jedoch die Polyacrylnitrilmembran gemäss Beispiel 5 einsetzt. Die Ergebnisse sind in Tabelle 5 angegeben.

Tabelle 5

| gelöste Verbindung | Rückhalt % | Durchfluss l/m² · h |
|---|---|---|
| Farbstoff der Formel (107), 1,5% | 99,8 | 83 |
| p-Toluolsulfonsäure, 2% | 16 | 104 |
| NaCl, 2% | 4 | 120 |

Beispiel 7

Beispiel 5 wird wiederholt, wobei jedoch die Umsetzung mit dem Farbstoff der Formel (101) ausgelassen wird. Die so erhaltene Membran weist nur 1,5% Rückhalt für p-Toluolsulfonsäure im Vergleich zu 48% in Beispiel 5 auf.

Verwendet man anstelle des Farbstoffs der Formel (101), die polyfunktionellen Verbindungen der Formeln (102) bis (105), so erreicht man ebenfalls gute Ergebnisse, wie in Tabelle 6 angegeben.

Tabelle 6

| Polyfunktionelle Verbindung | Rückhalt % | Durchfluss l/m² · h |
|---|---|---|
| (102) | 99,2 | 89 |
| (103) | 98,1 | 45 |
| (104) | 99,9 | 62 |
| (105) | 98,9 | 110 |

Testbedingungen: 1,5%ige Lösung des Farbstoffes der Formel (107), 20 bar, 40% C, pH-Wert: 7,0.

Beispiel 8

Beispiel 1 wird wiederholt, wobei anstelle der Membran aus einem Polysulfon eine solche aus einem Polyvinylidenfluorid mit wiederkehrenden Einheiten der Formel $-[-CH_2-CF_2-]-$ und einem Molekulargewicht von etwa 100 000 verwendet wird.

Vor der erfindungsgemässen Modifikation zeigt die Membran für den Farbstoff der Formel (107)

einen Rückhalt von 86%, nach der Modifikation einen solchen von 99,8%.

Beispiel 9

Eine nicht-modifizierte Membran gemäss Beispiel 2 wird 10 Minuten lang in eine 10%ige wässrige Lösung des Natriumsalzes eines Vinylaminvinylsulfonsäure-Copolymers (60/40) (MG-10 000–50 000) eingetaucht, dann 15 Minuten mit Leitungswasser gespült und schliesslich 5 Minuten lang in einer 2%igen Cyanurchloridlösung (pH-Wert von 10) behandelt. Die so erhaltene Membran weist folgende Werte für den Rückhalt und den Durchfluss auf: für den Farbstoff der Formel (107): 99.91% und 2000 $l/m^2 \cdot d$; für eine 2%ige Lösung von 4,4′-Dinitrostilben-2,2′-disulfonsäure (pH über 10): 93% und 1200 $l/m^2 \cdot d$.

Beispiel 10

Beispiel 9 wird wiederholt mit dem Unterschied, dass nach der Behandlung mit Cyanurchlorid die Membran 10 Minuten lang in Eiswasser gewaschen wird und dann die 3 Reaktionsschritte – Behandlung mit dem Copolymer, Spülen mit Leitungswasser und Vernetzung mit Cyanurchlorid wiederholt werden.

Die so erhaltene Membran weist für die 4,4′-Dinitrostilben-2,2′-disulfonsäure-Lösung einen Rückhalt von 96% und einen Durchfluss von 700 $l/m^2 \cdot d$ auf.

Die gleiche Membran wird für die Entsalzung einer Lösung verwendet, die 100 ppm der Verbindung der Formel

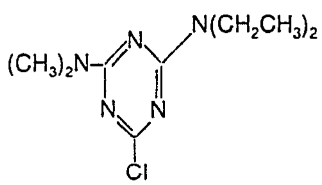

und 10% NaCl enthält.

Diese Lösung wird bei einem Druck von 40 bar durch die Membran gepresst. Die Werte für den Rückhalt betragen 88% für die genannte Triazinverbindung und 9% für NaCl bei einem Durchfluss von 800 $l/m^2 \cdot d$.

In einem weiteren Test mit der gleichen Membran wird eine Lösung, die 100 ppm der genannten Triazinverbindung und 2,5 Mol NaCl enthält, verwendet. Nach einer 5-fachen Konzentrierung ergibt sich für die Massenbilanz ein Rückhalt von 87% und für den Rückhalt der genannten Triazinverbindung im Durchschnitt 90%. Die Massenbilanz für NaCl liegt unter 5%. Die Durchflusswerte liegen zwischen 740 und 780 $l/m^2 \cdot d$.

Beispiel 11

Beispiel 2 wird wiederholt, wobei man jedoch die Folge der Modifikationsschritte (a), (b), (g), (h), (i), (j) und (k) zweimal durchführt und ausserdem noch die folgenden Änderungen einführt: Die Polyäthylenimin(PEI)-Konzentration beträgt in beiden Fällen 1,0%, anstelle von Schritt (b) erfolgt nur ein Abtropfenlassen der Membran während 5 Minuten und in den Modifikationsschritten (k) wird nur eine 0,1%ige Suspension von Cyanurchlorid (anstelle von 2%) verwendet.

Die so erhaltene Membran weist für den Farbstoff der Formel (107) (5%), 4,4′-Dinitrostilben-2,2′-disulfonsäure (DNS) (2%) und Natriumchlorid (NaCl) (1%) (jeweils wässrige Lösungen) folgende Rückhalt- bzw. Durchflusswerte auf: 99,9%/850 $l/m^2 \cdot d$; 97,5%/1760 $l/m^2 \cdot d$; und 12%/2700 $l/m^2 \cdot d$. (Testbedingungen: Raumtemperatur, 20 bar, pH-Wert: 7).

Enthalten die ersten beiden Lösungen (Farbstoff/DNS) zusätzlich jeweils 1% Kochsalz, so ist der Salzrückhalt negativ (das Permeat enthält eine höhere Salzkonzentration als die Ausgangslösung vor der Membranbehandlung).

Ähnliche Resultate erhält man, wenn man mit PEI-Konzentrationen (Modifikationsschritt (a)) zwischen 0,25 und 1% arbeitet und ausserdem im Modifikationsschritt (b) die Membran bis zu 120 Minuten wäscht oder nur in Wasser eintaucht.

Beispiel 12

Beispiel 11 wird wiederholt mit dem Unterschied, dass der Farbstoff der Formel (101) durch die farblose Verbindung der Formel (103b) ersetzt ist und die Modifikationsschritte (i) nicht ausgeführt werden.

Die Membran wird 20 Minuten in einer 0,5%igen wässrigen Lösung der Verbindung der Formel (103b), die einen pH-Wert von 7,0 aufweist, bei Raumtemperatur behandelt.

Die so erhaltene Membran weist für den Farbstoff der Formel (107) (5%), Rohrzucker (1%), DNS (2%) und NaCl (1%) (jeweils wässrige Lösungen) folgende Rückhalt- und Durchflusswerte auf: 99,4%/160 $l/m^2 \cdot d$; 94%/1320 $l/m^2 \cdot d$; 98%/1960 $l/m^2 \cdot d$; und 5%/160 $l/m^2 \cdot d$. (Testbedingungen: Raumtemperatur, 25 bar, pH 7).

Beispiel 13

In diesem Beispiel wird anstelle eines Reaktivfarbstoffs und eines nicht-ionischen Vernetzers eine farblose ionische Verbindung als Vernetzer eingesetzt.

Die Ausgangsmembran gemäss Beispiel 2 wird für 10 Minuten in eine 1%ige Lösung von PEI mit einem pH-Wert von 8,5 eingetaucht, dann 30 Minuten mit Leitungswasser gewaschen und schliesslich 30 Minuten in einer 0,1%igen Lösung der Verbindung der Formel (103b) mit einem pH-Wert von 7 bei Raumtemperatur behandelt.

Dann wird erneut für 30 Minuten gewaschen und die Modifikationsschritte (PEI-Waschen-103b) werden wiederholt.

Die so erhaltene Membran weist für den Farbstoff der Formel (107) (5%) und DNS (2%) (jeweils wässrige Lösungen) folgende Rückhalt- und Durchflusswerte auf: 99,9%/940 $l/m^2 \cdot d$ und 98,5%/800 $l/m^2 \cdot d$.

Werden die Modifikationsschritte nicht wie angegeben wiederholt, so weist die Membran einen

Rückhalt für den Farbstoff der Formel (107) (5%) von 98,6% auf; der Flux beträgt 2100 $l/m^2 \cdot d$ (Testbedingungen: 20 bar, Raumtemperatur, pH 7).

Beispiel 14

In diesem Beispiel wird eine eingekapselte amphotere Membran beschrieben.

Man wiederholt Beispiel 13 und stellt eine Membran mit zwei Schichten aus vernetztem PEI her, wobei die erste Schicht mit der Verbindung der Formel (103b) und die zweite Schicht mit der Verbindung der Formel (103a) vernetzt wird. Die Bedingungen, unter denen die Vernetzung durchgeführt wird entsprechen denen des Beispiels 13. In Tabelle 7 sind die Eigenschaften dieser Membran angegeben.

Beispiel 15

Beispiel 14 wird wiederholt, wobei jedoch die erste Schicht mit der Verbindung der Formel (103a) und die zweite Schicht mit der Verbindung der Formel (103b) vernetzt wird. Die Eigenschaften dieser Membran sind in Tabelle 7 angegeben.

Beispiel 16

Beispiel 14 wird wiederholt, wobei jedoch beide Schichten mit jeweils beiden Verbindungen der Formeln (103a) und (103b) (jeweils 0,1%) vernetzt werden. Die Reaktionsbedingungen sind diejenigen, die in Beispiel 14 angegeben sind. Die Eigenschaften dieser Membran sind in Tabelle 7 angegeben.

Tabelle 7

| Membran (Beispiel) | Testlösungen | | | | | |
|---|---|---|---|---|---|---|
| | Farbstoff der Formel (107) (5%) | | DNS 2% | | NaCl (1%) | |
| | Rückhalt (%) | Durchfluss ($l/m^2 \cdot d$) | Rückhalt (%) | Durchfluss ($l/m^2 \cdot d$) | Rückhalt (%) | Durchfluss ($l/m^2 \cdot d$) |
| 14 | 99,8 | 1520 | 94,2 | 1696 | 4,0 | 3200 |
| 15 | 98,4 | 2460 | 96 | 1243 | 1,0 | 2451 |
| 16 | 99,2 | 845 | 95 | 2383 | −2,0 | 1129 |

Testbedingungen: 20 bar, pH 7, Raumtemperatur.

Beispiel 17

Beispiel 11 wird wiederholt, wobei man jedoch anstelle von PEI unter gleichen Bedingungen (pH-Wert, Temperatur, Konzentration) ein Kondensationsprodukt aus Dicyandiamid, Ammoniumchlorid und Formaldehyd (US 3 290 310) verwendet.

Die so erhaltene Membran weist für den Farbstoff der Formel (107) (1,5%), DNS (2%), Rohrzukker (2%) und NaCl (1%) (jeweils wässrige Lösungen) folgende Rückhalt- und Durchflusswerte auf. 99,6%/749 $l/m^2 \cdot d$; 98%/1624 $l/m^2 \cdot d$; 89%/943 $l/m^2 \cdot d$ und 4,6%/1294 $l/m^2 \cdot d$.

Beispiel 18

Beispiel 11 wird wiederholt, wobei man jedoch anstelle von PEI ein Hydroxyäthyl-PEI (MG 60 000–80 000) unter gleichen Bedingungen (pH-Wert, Temperatur, Konzentration) verwendet. Die so erhaltene Membran weist für den Farbstoff der Formel (107) 5%ige wässrige Lösung) bei 50 °C und einem pH-Wert von 10 einem Rückhalt von 99,99% und einen Durchfluss (bei turbulenten Strömungsbedingungen) von 2149 $l/m^2 \cdot d$ auf.

Beispiel 19

Beispiel 2 wird wiederholt, wobei man jedoch anstelle von Cyanurchlorid eine 1%ige Lösung von Butan-1,4-diolglycidyläther bei einem pH-Wert von 8 und Raumtemperatur verwendet. Anschliessend wird die Membran 12 Stunden in einer wässrigen alkalischen Lösung gehalten. Die Eigenschaften dieser Membran sind in Tabelle 8 angegeben.

Beispiel 20

Beispiel 19 wird wiederholt, wobei man jedoch anstelle des Diepoxids ein kationisches Polyamido-polyamin-epichlorhydrin-Harz mit wiederkehrenden Einheiten der Formel

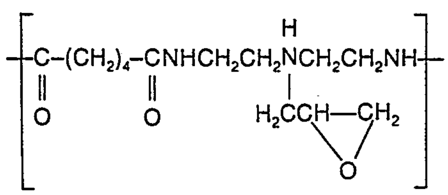

verwendet. Behandlungsbedingungen: 1%ige Lösung, pH-Wert 4,5, Raumtemperatur, 10 Minuten Reaktionszeit. Die Eigenschaften dieser Membran sind in Tabelle 8 angegeben.

Beispiel 21

Beispiel 19 wird wiederholt, wobei man jedoch ein kationisches Harz mit wiederkehrenden Einheiten der Formel

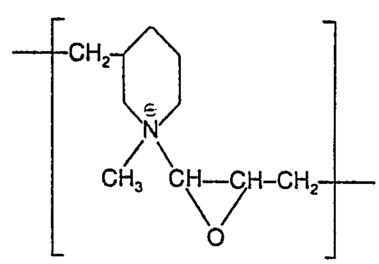

verwendet. Die Eigenschaften dieser Membran sind in Tabelle 8 angegeben.

Tabelle 8

| Membran (Beispiel) | Testlösungen | | | | | |
|---|---|---|---|---|---|---|
| | Farbstoff der Formel (107) (1,5%) | | DNS 2% | | NaCl (1%) | |
| | Rückhalt (%) | Durchfluss ($l/m^2 \cdot d$) | Rückhalt (%) | Durchfluss ($l/m^2 \cdot d$) | Rückhalt (%) | Durchfluss ($l/m^2 \cdot d$) |
| 19 | 99,8 | 597 | 99,0 | 1306 | 23,0 | 1481 |
| 20 | 99,9 | 443 | 98,6 | 1344 | 18,8 | 1493 |
| 21 | 99,9 | 1260 | 99,2 | 1842 | 6,4 | 2600 |

Testbedingungen: 20 bar, pH 7, Raumtemperatur.

**Patentansprüche**

1. Semipermeable eingekapselte Membran aus einem porösen, semipermeablen polymeren Substrat und einem dünnen semipermeablen Film, dadurch gekennzeichnet, dass der Film alle äusseren und zugänglichen inneren Oberflächen des Substrats bedeckt (einkapselt) und aus mindestens einer Schicht eines vernetzbaren hydrophilen Polymers besteht, die mit mindestens einer polyfunktionellen Verbindung mit mindestens zwei funktionellen Gruppen vernetzt ist, wobei das Substrat gegebenenfalls mit einer polyfunktionellen Verbindung mit mindestens zwei funktionellen Gruppen vorbehandelt ist.

2. Semipermeable Membran nach Anspruch 1, dadurch gekennzeichnet, dass sie erhältlich sind, in dem man alle äusseren und zugänglichen inneren Oberflächen des Substrats mit mindestens einer Schicht eines vernetzbaren hydrophilen Polymers beschichtet, wobei das Substrat gegebenenfalls mit einer polyfunktionellen Verbindung mit mindestens zwei funktionellen Gruppen vorbehandelt ist, und die Schicht mit mindestens einer polyfunktionellen Verbindung mit mindestens zwei funktionellen Gruppen vernetzt.

3. Membran nach Anspruch 1, dadurch gekennzeichnet, dass der semipermeable Film erhältlich ist, indem man

($a_1$) mindestens eine Schicht eines vernetzbaren hydrophilen nicht-ionischen Polymers auf dem Substrat ausbildet und die Schicht mit mindestens einer polyfunktionellen Verbindung mit mindestens zwei funktionellen Gruppen vernetzt, wobei mindestens eine der polyfunktionellen Verbindungen ionische Gruppen enthält, oder

($a_2$) mindestens eine Schicht eines vernetzbaren, hydrophilen, ionische Gruppen enthaltenden Polymers auf dem Substrat ausbildet und die Schicht mit mindestens einer polyfunktionellen Verbindung mit mindestens zwei funktionellen Gruppen vernetzt, oder

($a_3$) das Substrat mit einer polyfunktionellen Verbindung mit mindestens zwei funktionellen Gruppen behandelt, dann das Substrat mit einem vernetzbaren hydrophilen Polymer beschichtet und die Schicht mit mindestens zwei polyfunktionellen Verbindungen mit mindestens je zwei funktionellen Gruppen vernetzt ist.

4. Membran ($a_1$) nach Anspruch 3, dadurch gekennzeichnet, dass die Schicht des vernetzbaren, hydrophilen Polymers mit nicht-ionischen und ionischen polyfunktionellen Verbindungen mit mindestens zwei funktionellen Gruppen vernetzt ist.

5. Membran ($a_1$) nach Anspruch 3, dadurch gekennzeichnet, dass die Schicht des vernetzbaren, hydrophilen Polymers in beliebiger Reihenfolge mit einer ionischen und einer nicht-ionischen polyfunktionellen Verbindung oder mit zwei verschiedenen ionischen, polyfunktionellen Verbindungen, die gegebenenfalls entgegengesetzte Ladungen aufweisen, und gegebenenfalls zusammen mit einer nicht-ionischen polyfunktionellen Verbindung vernetzt ist.

6. Membran ($a_2$) nach Anspruch 3, dadurch gekennzeichnet, dass die Schicht des vernetzbaren, hydrophilen, ionische Gruppen enthaltenden Polymers mit einer nicht-ionischen und/oder ionischen polyfunktionellen Verbindung vernetzt ist.

7. Membran ($a_2$) nach Anspruch 6, dadurch gekennzeichnet, dass die Schicht des vernetzbaren, hydrophilen, ionische Gruppen enthaltenden Polymers mit einer ionischen polyfunktionellen Verbindung vernetzt ist, deren Ladung entgegengesetzt zu der der ionischen Gruppen des Polymers ist.

8. Membran ($a_2$) nach Anspruch 3, dadurch gekennzeichnet, dass das hydrophile Polymer amphoter ist und mit einer anionischen, vorzugsweise einer nicht-ionischen polyfunktionellen Verbindung vernetzt ist.

9. Membran ($a_3$) nach Anspruch 3, dadurch gekennzeichnet, dass das Substrat mit ionischen oder nicht-ionischen polyfunktionellen Verbindungen behandelt ist, dann mit einem vernetzbaren hydrophilen Polymer beschichtet und schliesslich diese Schicht in beliebiger Reihenfolge mit einer ionischen oder nicht-ionischen polyfunktionellen Verbindung mit mindestens zwei funktionellen Gruppen vernetzt ist.

10. Membran nach den Ansprüchen 1 oder 2, dadurch gekennzeichnet, dass zwei oder drei Schichten des vernetzbaren, hydrophilen Polymers auf dem Substrat ausgebildet sind und jede Schicht mit mindestens einer polyfunktionellen Verbindung mit mindestens zwei funktionellen Gruppen vernetzt ist.

11. Membran nach einem der Ansprüche 1 bis 10, dadurch gekennzeichnet, dass das semipermeable Substrat cellulosische Materialien, Polyacrylnitrile, aromatische Polysulfone, Polyamide, Polyvinylidenfluoride oder Polytetrafluoräthylene enthält oder aus diesen besteht.

12. Membran nach einem der Ansprüche 1 bis 11, dadurch gekennzeichnet, dass die vernetzbaren, hydrophilen Polymere aktive, an Stickstoff-, Sauerstoff- oder Schwefelatome gebundene Wasserstoffatome enthalten.

13. Membran nach Anspruch 12, dadurch gekennzeichnet, dass die vernetzbaren, hydrophilen Polymere Homo- oder Copolymerisate auf der Basis von Polyäthyleniminen, Polyvinylalkoholen, Cellulosederivaten, Polyvinylaminen, Polyvinylanilinen, Polypiperidinen oder Polydiallylaminderivate, ferner aminomodifizierte Polymere auf Basis von Epoxiden oder Epihalogenhydrinen oder amphotere Polymere sind, und die hydrophilen Polymere aktive, an Stickstoff-, Sauerstoff- oder Schwefelatome gebundene Wasserstoffatome enthalten.

14. Membran nach Anspruch 1, dadurch gekennzeichnet, dass die polyfunktionellen Verbindungen mit mindestens zwei funktionellen Gruppen nicht-ionische oder ionische organische monomere oder polymere Verbindungen sind, die reaktive Mehrfachbindungen oder Epoxid-, Aziridin-, Aldehyd-, Imidat-, Isocyanat-, Isothiocyanat-, Hydroxy-, Säure-, Säureanhydrid-, Säurehalogenid oder Kohlensäureimidhalogenidgruppen enthalten, oder Verbindungen sind, die als tertiäre Amine oder als Anionen abspaltbare Substituenten oder Kombinationen dieser Gruppen (Substituenten) enthalten.

15. Membran nach Anspruch 14, dadurch gekennzeichnet, dass die nicht-ionischen polyfunktionellen Verbindungen cyclische Kohlensäureimidhalogenide oder Verbindungen mit Epoxidgruppen sind.

16. Verfahren zur Herstellung einer semipermeablen eingekapselten Membran nach Anspruch 1, dadurch gekennzeichnet, dass man ein semipermeables polymeres Membransubstrat aus einem wässrigen System mit mindestens einer Schicht eines vernetzbaren hydrophilen Polymers beschichtet, wobei das Substrat gegebenenfalls mit einer polyfunktionellen Verbindung mit mindestens zwei funktionellen Gruppen vorbehandelt ist, und die Schicht mit mindestens einer polyfunktionellen Verbindung mit mindestens zwei funktionellen Gruppen vernetzt, in dem eine wässrige Zubereitung dieser Verbindung die Schicht durchdringt.

17. Verfahren nach Anspruch 16, dadurch gekennzeichnet, dass man

($a_1$) das Substrat mit mindestens einer Schicht eines vernetzbaren hydrophilen nicht-ionischen Polymers beschichtet und die Schicht mit mindestens einer polyfunktionellen Verbindung und mindestens zwei funktionellen Gruppen vernetzt, wobei mindestens eine der polyfunktionellen Verbindungen ionische Gruppen enthält, oder

($a_2$) das Substrat mit mindestens einer Schicht eines vernetzbaren, hydrophilen, ionische Gruppen enthaltenden Polymers beschichtet und die Schicht mit mindestens einer polyfunktionellen Verbindung mit mindestens zwei funktionellen Gruppen vernetzt, oder

($a_3$) das Substrat mit einer polyfunktionellen Verbindung mit mindestens zwei funktionellen Gruppen behandelt, dann das Substrat mit einem vernetzbaren hydrophilen Polymer beschichtet und die Schicht mit mindestens einer polyfunktionellen Verbindung mit mindestens zwei funktionellen Gruppen vernetzt.

18. Die nach den Verfahren der Ansprüche 16 oder 17 hergestellten Membranen.

19. Ultrafiltrations- oder Umkehrosmoseverfahren zur Konzentrierung und/oder Reinigung von Flüssigkeiten (Lösungen) oder zur Trennung von gelösten Komponenten, dadurch gekennzeichnet, dass man die Flüssigkeiten (Lösungen) auf einer Seite einer Membran gemäss einem der Ansprüche 1 bis 15 vorlegt und unter Anwendung eines hydraulischen Drucks, der grösser als der osmotische Druck der Lösungen ist, die Lösungen filtriert.

20. Verwendung der Membran nach einem der Ansprüche 1 bis 15 in Ultrafiltrations- oder Umkehrosmoseverfahren.

## Claims

1. A semipermeable encapsulated membrane from a porous, semipermeable polymeric substrate and a thin semipermeable film, wherein the film covers all external and accessible internal surfaces of the substrate (encapsulated), and consists of at least one layer of a cross-linkable hydrophylic polymer which is cross-linked with a least one polyfunctional compound containing at least two function groups, and whereby the substrate is optionally pretreated with a polyfunctional compound containing at least two functional groups.

2. The semipermeable membrane according to claim 1 wherein it is obtainable by coating all external and accessible internal surfaces of the substrate with at least one layer of a cross-linkable hydrophilic polymer, whereby the substrate optionally is pretreated with a polyfunctional compound containing at least two functional groups, and the layer is cross-linked with a polyfunctional compound containing at least two functional groups.

3. The membrane according to claim 1 wherein the thin semipermeable film is obtainable by

($a_1$) developing at least one layer of a cross-linkable hydrophilic non-ionic polymer onto the substrate and cross-linking the layer with at least one

polyfunction compound containing at least two functional groups, whereby at least one of the polyfunctional compounds contains ionic groups, or

($a_2$) developing at least one layer of a cross-linkable hydrophilic, ionic groups containing polymer onto the substrate and cross-linking the layer with at least one polyfunctional compound containing at least two functional groups, or

($a_3$) treating the substrate with a polyfunctional compound containing at least two functional groups, then coating the substrate with a cross-linkable hydrophilic polymer and cross-linking the layer with at least two polyfunctional compounds containing at least two functional groups.

4. The membrane ($a_1$) according to claim 3 wherein the layer of the cross-linkable hydrophilic polymer is cross-linked with non-ionic and ionic polyfunctional compounds containing at least two functional groups.

5. The membrane ($a_1$) according to claim 3 wherein the layer of the cross-linkable, hydrophilic polymer is cross-linked in any order with an ionic and a non-ionic polyfunctional compound or with two different ionic, polyfunctional compounds, containing optionally opposite charges, and cross-linked optionally together with a non-ionic polyfunctional compound.

6. The membrane ($a_2$) according to claim 3 wherein the layer of the cross-linkable, hydrophilic, ionic groups containing polymer is cross-linked with a non-ionic and/or ionic polyfunctional compound.

7. The membrane ($a_2$) according to claim 6 wherein the layer of the cross-linkable, hydrophilic, ionic groups containing polymer is cross-linked with an ionic polyfunctional compound, the charges thereof being opposite to those of the ionic groups of the polymer.

8. The membrane ($a_2$) according to claim 3 wherein the hydrophilic polymer is amphoteric and cross-linked with an anionic, preferably a non-ionic polyfunctional compound.

9. The membrane ($a_3$) according to claim 3 wherein the substrate is treated with ionic or non-ionic polyfunctional compounds, then coated with a cross-linkable, hydrophilic polymer and finally cross-linking this layer in any order with an ionic or non-ionic polyfunctional compound containing at least two functional groups.

10. The membrane according to claim 1 or 2 wherein two or three layers of the cross-linkable, hydrophilic polymer are developed onto the substrate and each layer is cross-linked with at least one polyfunctional compound containing at least two functional groups.

11. The membrane according to any one of claims 1 to 10 wherein the semipermeable substrate contains cellulosic materials, polyacrylonitriles, aromatic polysulfones, polyamides, polyvinylidene fluorides or polytetrafluoroethylenes or consists thereof.

12. The membrane according to any one of claims 1 to 11 wherein the cross-linkable hydrophilic polymers contain active hydrogen atoms bonded to nitrogen, oxygen or sulfur atoms.

13. The membrane according to claim 12 wherein the cross-linkable, hydrophilic polymers are homo- or copolymers on the basis of polyethylene imines, polyvinylalcohols, cellulose derivatives, polyvinylamines, polyvinylanilines, polypiperidines, polydiallylamines, further amino modified polymers on basis of epoxides or epihalohydrines, or amphoteric polymers, and the hydrophilic polymers contain active hydrogen atoms bonded to nitrogen, oxygen or sulfur atoms.

14. The membrane according to claim 1 wherein the polyfunctional compounds containing at least two functional groups are non-ionic or ionic organic monomeric or polymeric compounds containing reactive multiple bonds, or epoxide, aziridine aldehyde, imidate, isocyanate, isothiocyanate, hydroxyl, carboxylic, carboxylic-acid anhydride, carboxylic-acid halide or carbonic imide halide groups, or compounds containing substituents detachable as tertiary amines or as anions, or compounds containing any combination of these groups (substituents).

15. The membrane according to claim 14 wherein the non-ionic polyfunctional compounds are cyclic carbonic acid imide halides or compounds containing epoxide groups.

16. The process for the manufacture of a semipermeable encapsulated membrane according to claim 1, which comprises coating a semipermeable membrane substrate with at least one layer of a cross-linkable, hydrophilic polymer from an aqueous system, whereby the substrate is optionally pretreated with a polyfunctional compound containing at least two functional groups, and cross-linking the layer by penetrating it with an aqueous preparation of at least one polyfunctional compound containing at least two functional groups.

17. A process according to claim 16 wherein

($a_1$) depositing at least one layer of a cross-linkable, hydrophilic, non-ionic polymer onto the substrate and cross-linking the layer with at least one polyfunctional compound containing at least two functional groups, whereby at least one of the polyfunctional compounds contains ionic groups, or

($a_2$) depositing at least one layer of a cross-linkable, hydrophilic, ionic groups containing polymer onto the substrate and cross-linking the layer with at least one polyfunctional compound containing at least two functional groups, or

($a_3$) treating the substrate with a polyfunctional compound containing at least two functional groups, then depositing onto said substrate a cross-linkable hydrophilic polymer and cross-linking the layer with at least one polyfunctional compound containing at least two functional groups.

18. The membrane obtained according to the process of claim 16 or 17.

19. An ultrafiltration or reverse osmosis process for concentrating and/or purifying liquids (solutions) or separating components dissolved which

comprises disposing the liquids (solutions) on one side of a membrane according to any one of the claims 1 to 15, and filtrating the solutions by applying a hydraulic pressure which is greater than the osmotic pressure of said solution.

20. The use of the membrane according to any one of claims 1 to 15 in ultrafiltration and reverse osmosis processes.

**Revendications**

1. Membrane semi-perméable encapsulée, constituée d'un substrat polymère semi-perméable, poreux et d'une pellicule ou d'un film semi-perméable, caractérisée en ce que la pellicule ou le film recouvre (encapsule) toutes les surfaces externes et toutes les surfaces internes accessibles du substrat, et se compose d'au moins une couche d'un polymère hydrophile réticulable, qui est réticulé avec au moins un composé polyfonctionnel avec au moins deux radicaux fonctionnels, où le substrat est éventuellement prétraité par un composé polyfonctionnel comportant au moins deux radicaux fonctionnels.

2. Membrane semi-perméable suivant la revendication 1, caractérisée en ce qu'on l'obtient pour autant que l'on revête toutes les surfaces externes et toutes les surfaces internes accessibles du substrat d'au moins une couche d'un polymère hydrophile réticulable, où le substrat est éventuellement prétraité par un composé polyfonctionnel comportant au moins deux radicaux fonctionnels, et la couche est réticulée avec au moins un composé polyfonctionnel comportant au moins deux radicaux fonctionnels.

3. Membrane suivant la revendication 1, caractérisée en ce que l'on obtient le film ou la pellicule semi-perméable pour autant que

($a_1$) on forme au moins une couche d'un polymère non ionique, hydrophile, réticulable, sur le substrat et on réticule la couche avec au moins un composé polyfonctionnel comportant au moins deux radicaux fonctionnels, où au moins l'un des composés polyfonctionnels contient des radicaux ioniques, ou

($a_2$) on forme au moins une couche d'un polymère contenant des radicaux ioniques, hydrophile, réticulable, sur le substrat et on réticule la couche avec au moins un composé polyfonctionnel comportant au moins deux radicaux fonctionnels, ou bien

($a_3$) on traite le substrat par un composé polyfonctionnel comportant au moins deux radicaux fonctionnels, puis on recouvre ou revêt le substrat d'un polymère hydrophile réticulable et on réticule la couche avec au moins deux composés polyfonctionnels comportant chacun au moins deux radicaux fonctionnels.

4. Membrane ($a_1$) suivant la revendication 3, caractérisée en ce que la couche du polymère hydrophile, réticulable, est réticulée avec des composés polyfonctionnels non ioniques et ioniques qui comportent au moins deux radicaux fonctionnels.

5. Membrane ($a_1$) suivant la revendication 3, caractérisée en ce que la couche du polymère hydrophile, réticulable, est réticulée selon n'importe quelle suite voulue avec un composé polyfonctionnel ionique et un composé polyfonctionnel non ionique, ou avec deux composés polyfonctionnels, ioniques, différents, qui présentent éventuellement des charges opposées, et est éventuellement réticulée ensemble avec un composé polyfonctionnel non ionique.

6. Membrane ($a_2$) suivant la revendication 3, caractérisée en ce que la couche du polymère contenant des radicaux ioniques, hydrophile, réticulable, est réticulée avec un composé polyfonctionnel non ionique et/ou ionique.

7. Membrane ($a_2$) suivant la revendication 6, caractérisée en ce que la couche du polymère contenant des radicaux ioniques, hydrophile, réticulable, est réticulée avec un composé polyfonctionnel ionique dont la charge est opposée à celle des radicaux ioniques du polymère.

8. Membrane ($a_2$) suivant la revendication 3, caractérisée en ce que le polymère hydrophile est amphotère et est réticulé avec un composé polyfonctionnel anionique, de préférence un composé polyfonctionnel non ionique.

9. Membrane ($a_3$) suivant la revendication 3, caractérisée en ce que le substrat est traité par un composé polyfonctionnel ionique ou non ionique, puis est recouvert ou revêtu d'un polymère hydrophile, réticulable et, finalement, cette couche est réticulée suivant n'importe quelle suite voulue avec un composé polyfonctionnel ionique, ou avec un composé polyfonctionnel non ionique, qui comportent au moins deux radicaux fonctionnels.

10. Membrane suivant les revendications 1 ou 2, caractérisée en ce qu'on forme deux ou trois couches du polymère hydrophile, réticulable, sur le substrat et chaque couche est réticulée avec au moins un composé polyfonctionnel comportant au moins deux radicaux fonctionnels.

11. Membrane suivant l'une des revendications 1 à 10, caractérisée en ce que le substrat semi-perméable contient des ou se compose de matières cellulosiques, de polyacrylonitriles, de polysulfones aromatiques, de polyamides, de polyfluorures de vinylidène ou de polytétrafluoréthylènes.

12. Membrane suivant l'une des revendications 1 à 11, caractérisée en ce que les polymères hydrophiles, réticulables, contiennent des atomes d'hydrogène actifs, liés à des atomes d'azote, d'oxygène ou de soufre.

13. Membrane suivant la revendication 12, caractérisée en ce que les polymères hydrophiles, réticulables sont des homopolymères ou des copolymères à base de polyéthylèneimines, d'alcools polyvinyliques, de dérivés de la cellulose, de polyvinylamines, de polyvinylanilines, de polypipéridines ou de dérivés de polydiallylamines, mais aussi des polymères aminomodifiés à base d'époxydes ou d'épihalogénhydrines, ou des polymères amphotères, et les polymères hydrophiles contiennent des atomes d'hydrogène actifs, liés à des atomes d'azote, d'oxygène ou de soufre.

14. Membrane suivant la revendication 1, caractérisée en ce que les composés polyfonctionnels comportant au moins deux radicaux fonctionnels sont des composés polymères ou monomères, organiques, non ioniques ou ioniques, qui contiennent des liaisons multiples réactives ou des radicaux époxyde, aziridine, aldéhyde, imidate, isocyanate, isothiocyanate, hydroxyle, acide, anhydride d'acide, halogénure d'acide ou halogénure d'imide d'acide carboxylique, ou sont des composés qui contiennent des combinaisons de ces radicaux (substituants) ou des substituants, séparables, à titre d'anions ou d'amines tertiaires.

15. Membrane suivant la revendication 14, caractérisée en ce que les composés polyfonctionnels non ioniques sont des halogénures d'imides d'acides carboxyliques cycliques ou des composés avec des radicaux époxyde.

16. Procédé de préparation d'une membrane encapsulée semi-perméable suivant la revendication 1, caractérisé en ce que l'on recouvre ou revêt un substrat pour membrane, polymère, semi-perméable, au départ d'un système aqueux, d'au moins une couche d'un polymère hydrophile réticulable, où le substrat est éventuellement prétraité par un composé polyfonctionnel comportant au moins deux radicaux fonctionnels, et on réticule la couche avec au moins un composé polyfonctionnel comportant au moins deux radicaux fonctionnels, par imprégnation de la couche par une préparation aqueuse de ces composés.

17. Procédé suivant la revendication 16, caractérisé en ce que

($a_1$) on recouvre ou revêt le substrat d'au moins une couche d'un polymère non ionique, hydrophile, réticulable et on réticule la couche avec au moins un composé polyfonctionnel et au moins deux radicaux fonctionnels, où au moins l'un des composés polyfonctionnels contient des radicaux ioniques, ou bien

($a_2$) on recouvre ou revêt le substrat d'au moins une couche d'un polymère contenant des radicaux ioniques, hydrophile, réticulable, et on réticule la couche avec au moins un composé polyfonctionnel comportant au moins deux radicaux fonctionnels, ou bien

($a_3$) on traite le substrat par un composé polyfonctionnel comportant au moins deux radicaux fonctionnels, puis on recouvre ou revêt le substrat d'une couche d'un polymère hydrophile, réticulable et on réticule la couche avec au moins un composé polyfonctionnel comportant au moins deux radicaux fonctionnels.

18. Membranes préparées suivant le procédé des revendications 16 ou 17.

19. Procédé d'ultrafiltration ou d'osmose inverse en vue de la concentration et/ou de l'épuration de liquides (solutions) ou de la séparation de composants dissous, caractérisé en ce que l'on dispose les liquides (solutions) d'un côté d'une membrane suivant l'une des revendications 1 à 15 et on les filtre en recourant à l'emploi d'une pression hydraulique qui est supérieure à la pression osmotique des solutions.

20. Utilisation de la membrane suivant l'une quelconque des revendications 1 à 15 dans des procédés d'ultrafiltration ou d'osmose inverse.